# EUROPEAN PATENT SPECIFICATION

(11) **EP 3 323 685 B1**
(45) Date of publication and mention of the grant of the patent: **17.04.2019**
(21) Application number: 17198811.6
(22) Date of filing: 27.10.2017
(51) Int. Cl.: B60T 8/36, B62K 19/38

(54) **STRADDLED VEHICLE**
GRÄTSCHSITZFAHRZEUG
VÉHICULE À ENFOURCHER

(30) Priority: 31.10.2016 JP 2016213084
(43) Date of publication of application: 23.05.2018
(73) Proprietor: Yamaha Hatsudoki Kabushiki Kaisha, Iwata-shi Shizuoka 438-8501 (JP)
(72) Inventor: MIYAMOTO, Noboru, Iwata-shi, Shizuoka 438-8501 (JP)
(74) Representative: Grünecker Patent- und Rechtsanwälte PartG mbB

(56) References cited:
- EP-A1- 2 216 218
- EP-A1- 2 565 090
- EP-A1- 2 868 958

## Description

This invention relates to a straddled vehicle having a hydraulic device according to the preamble of independent claim 1.

Japanese Unexamined Patent Publication No. 2013-47018 (and its corresponding family document EP 2565090 A) discloses a two-wheeled motor vehicle which employs an ABS (antilock brake system). The ABS includes a hydraulic unit for regulating the hydraulic pressure of a brake fluid. The hydraulic unit is fixed to a head tube. A front cover is arranged forward, rightward and leftward of the hydraulic unit.

The hydraulic unit regulates the hydraulic pressure of a front brake, and the hydraulic pressure of a rear brake. The hydraulic unit is connected to four pipes. The four pipes are a front upstream pipe, a front downstream pipe, a rear upstream pipe, and a rear downstream pipe. The front upstream pipe connects a front master brake and the hydraulic unit. The front downstream pipe connects the hydraulic unit and the front brake. The rear upstream pipe connects a rear master cylinder and the hydraulic unit. The rear downstream pipe connects the hydraulic unit and the rear brake.

The front upstream pipe and rear upstream pipe both extend in the same direction (e.g. forward) from the hydraulic unit. The front downstream pipe and rear downstream pipe both extend in the same direction (e.g. upward) from the hydraulic unit. The front upstream pipe and front downstream pipe are arranged to protrude to a large extent leftward of the hydraulic unit.

However, the conventional example with such construction has the following problem.

The head tube and front cover have only a narrow space in between. When headlights and the like are attached to the front cover, the space between the head tube and the front cover, headlights and the like is narrow. The front cover and the members (e.g. the headlights and the like) attached to the front cover are hereinafter collectively called "appearance constituent members". The hydraulic unit is installed in the space between the head tube and appearance constituent members. The hydraulic unit needs a relatively large installation space. Further, the components ("other components" hereinafter) other than the hydraulic unit are also installed in the space between the head tube and appearance constituent members. It is therefore difficult to arrange the hydraulic unit and other components appropriately between the head tube and appearance constituent members.

It has been considered to place the hydraulic unit to have the center thereof in a transverse direction of the straddled vehicle located on a vehicle center plane. Here, the vehicle center plane is an imaginary plane which passes through the center of the straddled vehicle, and extends perpendicular to the transverse direction of the straddled vehicle. This arrangement can form one space rightward of the hydraulic unit and another space leftward of the hydraulic unit. These two spaces are divided by the hydraulic unit. Since the center of the hydraulic unit in the transverse direction is located on the vehicle center plane, the two spaces have substantially the same size. Thus, the narrow space between the head tube and appearance constituent members is divided substantially evenly into two spaces. Each of the two spaces is therefore relatively small. As a result, it may be difficult to arrange the other components in each space.

Then, it has been considered to place the hydraulic unit in a position shifted from the vehicle center plane. Specifically, research was made to place the hydraulic unit to have the center thereof in the transverse direction located on one side of the vehicle center plane. This arrangement can form a relatively large space on either one of rightward and leftward of the hydraulic unit. The hydraulic unit and other components can therefore be arranged efficiently.

However, it has been found that a new problem arises when the hydraulic unit is placed in the position shifted from the vehicle center plane. The new problem lies in a difficulty in appropriately installing the pipes connected to the hydraulic unit. With the relatively large space formed on either one of rightward and leftward of the hydraulic unit, the space formed on the other of rightward and leftward of the hydraulic unit is relatively small. That is, the appearance constituent members are located close to the other of the right and left sides of the hydraulic unit. This imposes limitations on locations where the pipes are installed. It is difficult to install the pipes appropriately in limited locations. It is difficult, for example, to install the pipes in locations out of contact with the appearance constituent members. It is difficult, for example, to install the pipes to be out of contact with one another.

It is an object of the present invention to provide a straddled vehicle which can arrange a hydraulic unit efficiently in a space between a head tube and appearance constituent members.

According to the present invention said object is solved by straddled vehicle having the features of independent claim 1. Preferred embodiments are laid down in the dependent claims.

Accordingly it is provided the following construction.

A straddled vehicle, comprises:
a head tube;
a steering device pivotably supported by the head tube;
a hydraulic unit fixed to the head tube, and including a first connector, and a second connector disposed in the same position as the first connector in a transverse direction of the straddled vehicle or in a position rightward of the first connector;
first piping connected to the first connector;
second piping connected to the second connector;
a master cylinder disposed higher than the hydraulic unit, fixed to the steering device, and connected to one of the first piping and the second piping;
a hydraulic brake disposed lower than the hydraulic unit, and connected to the other of the first piping and the second piping; and
an appearance constituent member disposed in front of the hydraulic unit, and disposed rightward and leftward of the hydraulic unit;
wherein
the hydraulic unit has a center thereof in the transverse direction, the center being located in one of directions rightward and leftward of a vehicle center plane extending through a center of the straddled vehicle and perpendicular to the transverse direction;
the first piping has a first end connected to the first connector, the first end extending in a first direction from the first connector;
the first direction includes a component in the transverse direction;
the component in the transverse direction of the first direction points rightward;
the second piping has a second end connected to the second connector, the second end extending in a second direction from the second connector;
the second direction includes a component in the transverse direction; and
the component in the transverse direction of the second direction points leftward.

The center of the hydraulic unit in the transverse direction of the straddled vehicle is located on one side of the vehicle center plane. That is, the center of the hydraulic unit in the transverse direction is not on the vehicle center plane, but is shifted from the vehicle center plane. Consequently, a relatively large space can be formed either rightward or leftward of the hydraulic unit. The space between the head tube and appearance constituent member can therefore easily accommodate, along with the hydraulic unit, components other than the hydraulic unit. Thus, the hydraulic unit can be placed efficiently in the space between the head tube and appearance constituent member.

The hydraulic unit includes the first connector and second connector. The second connector may be disposed in the same position as the first connector in the transverse direction of the straddled vehicle. In other words, the position of the second connector in the transverse direction may be the same as the position of the first connector in the transverse direction. Or the second connector may be disposed in a position rightward of the first connector.

The first piping is connected to the first connector. The second piping is connected to the second connector. The first piping is further connected to one of the master cylinder and hydraulic brake. When the first piping is connected to the master cylinder, the second piping is connected to the hydraulic brake. When the first piping is connected to the hydraulic brake, the second piping is connected to the master cylinder.

The first piping has the first end connected to the first connector. The first end extends in the first direction from the first connector. The first direction includes a component in the transverse direction. In other words, the component in the transverse direction of the first direction is not zero. Similarly, the second piping has the second end connected to the second connector. The second end extends in the second direction from the second connector. The second direction includes a component in the transverse direction. Here, the component in the transverse direction of the first direction points rightward. The component in the transverse direction of the second direction points leftward. The first piping and second piping can therefore be arranged appropriately.

Assume, for example, that the center of the hydraulic unit in the transverse direction is located leftward of the vehicle center plane, and that the first connector is disposed leftward of the second connector. In this case, the first connector is disposed closer than the second connector to the appearance constituent member. That is, the appearance constituent member is located close to the left side of the first connector. Even in this case, since the first end extends rightward from the first connector, the first piping can be prevented from contacting the appearance constituent member, and the radius of curvature of the first piping can be inhibited from becoming too small. Further, since the first end and second end extend in different directions, the first piping and second piping can conveniently be prevented from contacting each other.

Assume, for example, that the center of the hydraulic unit in the transverse direction is located rightward of the vehicle center plane, and that the second connector is disposed rightward of the first connector. In this case, the second connector is disposed closer than the first connector to the appearance constituent member. That is, the appearance constituent member is located close to the right side of the second connector. Even in this case, since the second end extends leftward from the second connector, the second piping can be prevented from contacting the appearance constituent member, and the radius of curvature of the second piping can be inhibited from becoming too small. Further, since the first end and second end extend in different directions, the first piping and second piping can conveniently be prevented from contacting each other.

In the above straddled vehicle, it is preferred that the first direction includes a component in a longitudinal direction of the straddled vehicle; the second direction includes a component in the longitudinal direction; and the component in the longitudinal direction of the first direction points opposite to the component in the longitudinal direction of the second direction. When, for example, the component in the longitudinal direction of the first direction points forward, the component in the longitudinal direction of the second direction points rearward. When, for example, the component in the longitudinal direction of the first direction points rearward, the component in the longitudinal direction of the second direction points forward. Consequently, the first direction differs greatly from the second direction. In plan view, for example, the difference between the first direction and second direction is larger than 90 degrees. The first piping and second piping can therefore be inhibited from contacting each other all the more appropriately. Thus, the first piping and second piping can be arranged all the more appropriately.

In the above straddled vehicle, it is preferred that the first direction includes a component in an up-down direction of the straddled vehicle; the second direction includes a component in the up-down direction; and the component in the up-down direction of the first direction points opposite to the component in the up-down direction of the second direction. When, for example, the component in the up-down direction of the first direction points upward, the component in the up-down direction of the second direction points downward. When, for example, the component in the up-down direction of the first direction points downward, the component in the up-down direction of the second direction points upward. Consequently, the first direction differs greatly from the second direction. In a front view of the vehicle, for example, the difference between the first direction and second direction is larger than 90 degrees. The first piping and second piping can therefore be inhibited from contacting each other all the more appropriately. Thus, the first piping and second piping can be arranged all the more appropriately.

In the above straddled vehicle, it is preferred that the first connector and the second connector are arranged on the same surface of the hydraulic unit. Consequently, the first piping and second piping can be arranged all the more appropriately.

In the above straddled vehicle, it is preferred that the first connector and the second connector are both located in one of the directions rightward and leftward of the vehicle center plane. In other words, the first connector preferably is located on the same side of the vehicle center plane as the second connector. According to this, the first piping and second piping adjacent the hydraulic unit can easily be installed on one side of the vehicle center plane. The first piping and second piping adjacent the hydraulic unit can be arranged efficiently in the space between the head tube and appearance constituent member.

In the above straddled vehicle, it is preferred that the first piping has a first proximal pipe including the first end; a first joint member connected to the first proximal pipe; and a first distal pipe connected to the first joint member; and the second piping has a second proximal pipe including the second end; a second joint member connected to the second proximal pipe; and a second distal pipe connected to the second joint member; and wherein the first proximal pipe and the second proximal pipe do not overlap in plan view. The first proximal pipe, first joint member, and first distal pipe are connected in this order. The first end corresponds to one end of the first proximal pipe. Similarly, the second proximal pipe, second joint member, and second distal pipe are connected in this order. The second end corresponds to one end of the second proximal pipe. That "the first proximal pipe and the second proximal pipe do not overlap in plan view." means the same as that the first proximal pipe and the second proximal pipe do not intersect in plan view. This can reliably prevent contact between the first proximal pipe and second proximal pipe. That is, the first proximal pipe and second proximal pipe can be arranged all the more appropriately.

In the above straddled vehicle, it is preferred that the first joint member overlaps the head tube in plan view; the second joint member overlaps the head tube in plan view; and the first proximal pipe and the second proximal pipe are arranged leftward of a right end of an entirety of the hydraulic unit, the first joint member, and the second joint member, and rightward of a left end of the entirety of the hydraulic unit, the first joint member, and the second joint member. Since the first joint member overlaps the head tube in plan view, the first joint member is disposed adjacent the head tube. Since the second joint member overlaps the head tube in plan view, the second joint member is disposed adjacent the head tube. The first proximal pipe and second proximal pipe are arranged within a range in the transverse direction in which the hydraulic unit, first joint member, and second joint member are located. As a result of these, the hydraulic unit, first joint member, second joint member, first proximal pipe, and second proximal pipe can be arranged efficiently. The relatively large space formed either rightward or leftward of the hydraulic unit can conveniently be inhibited from being reduced in size by the first proximal pipe, second proximal pipe, first joint member, and second joint member.

In the above straddled vehicle, it is preferred that the number of the master cylinder to which the hydraulic unit is connected is one; and the number of the hydraulic brake to which the hydraulic unit is connected is one. In other words, the number of channels provided for the hydraulic unit preferably is one. This can keep down the number of pipes connected to the hydraulic unit. For example, the pipes connected to the hydraulic unit are limited to only the first piping and second piping. This can further reduce in size the installation space of the piping connected to the hydraulic unit.

In the above straddled vehicle, it is preferred that one of the first piping and the second piping connected to the master cylinder has a downwardly curved portion which is curved to form a downward protuberance; and the downwardly curved portion is located in a position lower than any one of the first connector and the second connector. For expediency here, one of the first piping and the second piping connected to the master cylinder is called "upper piping". Since the downwardly curved portion is located in a position lower than any one of the first connector and the second connector, it can further increase the length of the upper piping. The upper piping can therefore conveniently bend with pivoting of the steering device.

In the above straddled vehicle, it is preferred that the other of the first piping and the second piping connected to the hydraulic brake has an upwardly curved portion which is curved to form an upward protuberance; and the upwardly curved portion is located in a position higher than any one of the first connector and the second connector. For expediency here, the other of the first piping and the second piping connected to the hydraulic brake is called "lower piping". Since the upwardly curved portion is located in a position higher than any one of the first connector and the second connector, it can further increase the length of the lower piping. The lower piping can therefore conveniently bend with pivoting of the hydraulic brake.

Preferably, the above straddled vehicle further comprises a storage unit disposed to overlap the hydraulic unit in a side view of the vehicle; wherein the storage unit has a center thereof in the transverse direction, which center is located opposite, across the vehicle center plane, to the center of the hydraulic unit in the transverse direction. When, for example, the center of the hydraulic unit in the transverse direction is located rightward of the vehicle center plane, the center of the storage unit in the transverse direction is located leftward of the vehicle center plane. When, for example, the center of the hydraulic unit in the transverse direction is located leftward of the vehicle center plane, the center of the storage unit in the transverse direction is located rightward of the vehicle center plane. According to this, the storage unit can conveniently be installed in one relatively large space formed in one of the directions rightward and leftward of the hydraulic unit. Further, the storage unit can easily be increased in size. The storage unit is an example of the other components noted hereinbefore.

Preferably, the above straddled vehicle further comprises a first holding member for holding the first piping, the first holding member being disposed in a position lower than a top end of the head tube and higher than a bottom end of the head tube; and a second holding member for holding the second piping, the second holding member being disposed in a position lower than the top end of the head tube and higher than the bottom end of the head tube; wherein the first holding member and the second holding member are arranged in a line in an up-down direction in a side view of the vehicle. Both the first holding member and second holding member are arranged within a range in the up-down direction in which the head tube is located. Further, in a side view of the vehicle, the first holding member and second holding member are arranged in a line in the up-down direction. The first holding member and second holding member are thus close to each other. This enables operations for detaching and attaching the first holding member and operations for detaching and attaching the second holding member to be performed smoothly.

Preferably, the above straddled vehicle further comprises a first holding member supported by the head tube for holding the first piping; and a second holding member supported by the head tube for holding the second piping; wherein at least one of the first holding member and the second holding member is disposed in a position closer to the head tube than one end of the hydraulic unit farthest from the head tube. In other words, it is preferable that at least one of the first holding member and the second holding member is disposed in a position closer to the head tube than is at least one of the right end and left end of the hydraulic unit. This can shorten at least one of a variation length of the first piping at the time of the steering device pivoting relative to the head tube and a variation length of the second piping at the time of the steering device pivoting relative to the head tube.

For the purpose of illustrating the invention, there are shown in the drawings several forms which are preferred embodiments.
Fig. 1 is a right side view of a straddled vehicle according to an embodiment.
Fig. 2 is a front view of a portion of the straddled vehicle.
Fig. 3 is a plan view of a front portion of the straddled vehicle.
Fig. 4 is a right side view of the front portion of the straddled vehicle.
Fig. 5 is a front view of a portion of the straddled vehicle.
Fig. 6 is a left side view of a portion of the straddled vehicle.
Fig. 7 is a plan view of a hydraulic unit, a first end, and a second end.
Fig. 8 is a plan view of the hydraulic unit, first piping, and second piping.
Fig. 9 is a front view of a portion of the straddled vehicle.
Fig. 10 is a plan view of the front portion of the straddled vehicle.
Fig. 11 is a left side view of the front portion of the straddled vehicle.
Fig. 12 is a front view of a hydraulic unit, a first end, and a second end according to a modified embodiment.
Fig. 13 is a left side view of a straddled vehicle according to a modified embodiment.

A straddled vehicle according to the present teaching will be described hereinafter with reference to the drawings.

### 1. Outline construction of the straddled vehicle

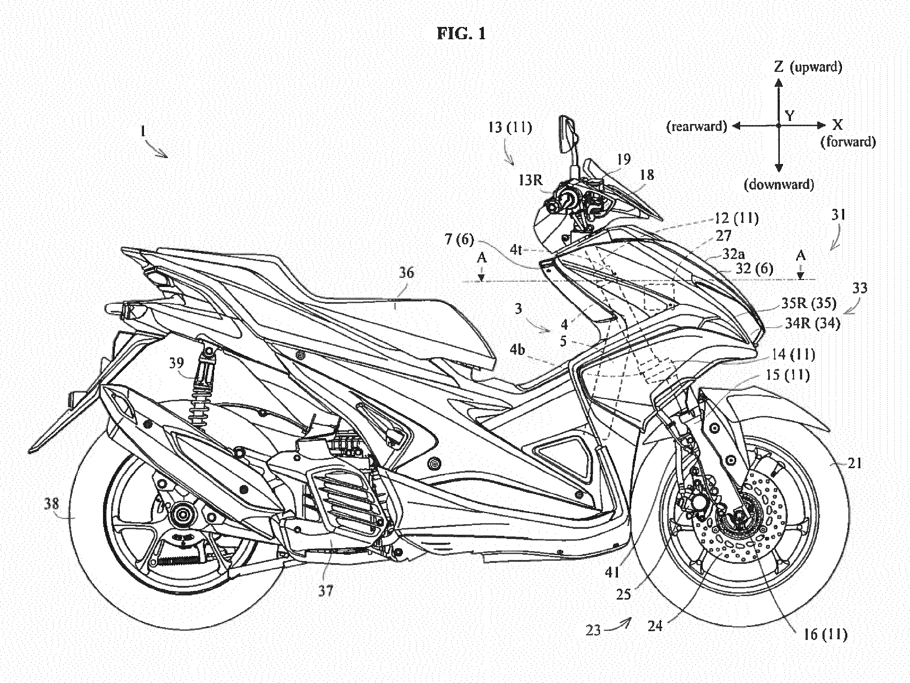

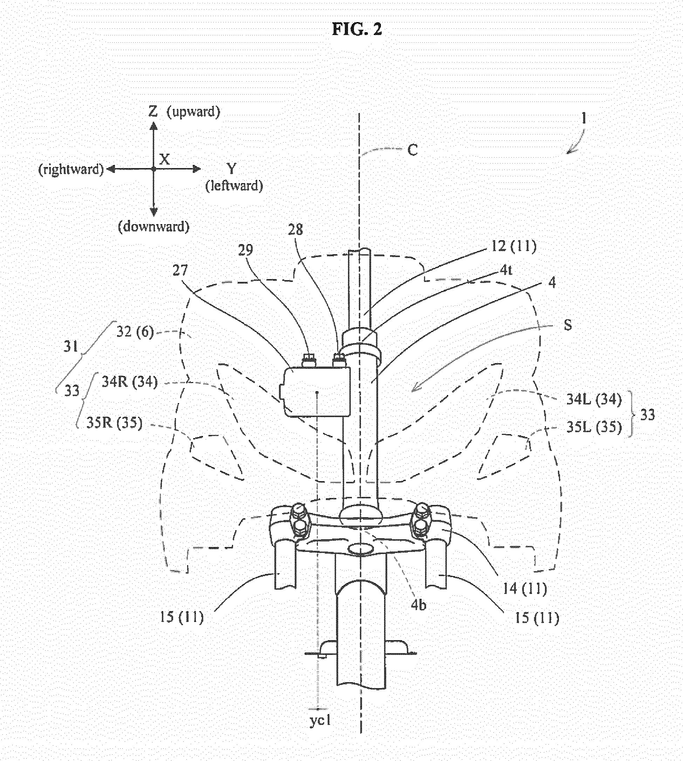

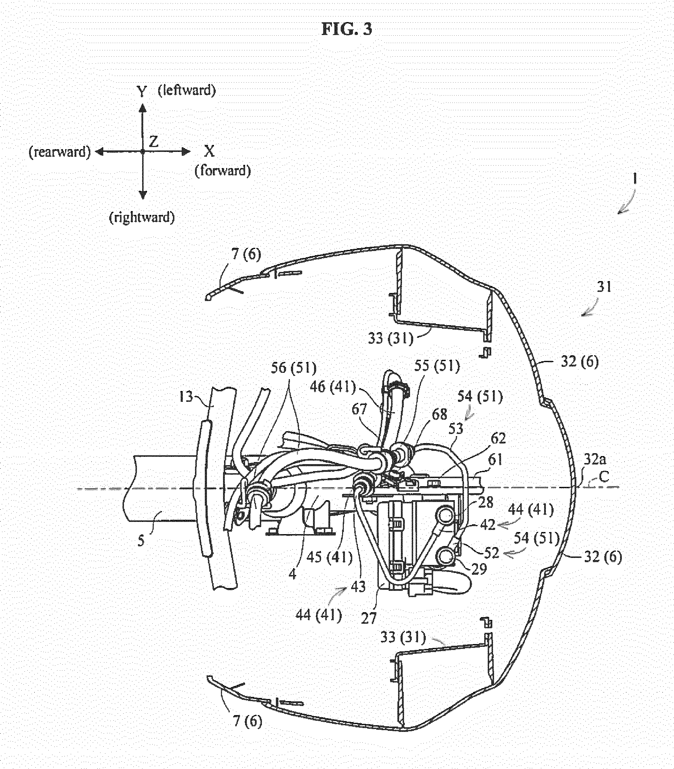

Fig. 1 is a right side view of the straddled vehicle according to an embodiment. Fig. 2 is a front view of a portion of the straddled vehicle according to the embodiment. Fig. 3 is a plan view of a front portion of the straddled vehicle according to the embodiment.

Figs. 1 and 2 show a longitudinal direction X, a transverse direction Y, and an up-down direction Z of a straddled vehicle 1. The longitudinal direction X, transverse direction Y, and up-down direction Z are defined with reference to a rider mounted on the straddled vehicle 1. The longitudinal direction X, transverse direction Y, and up-down direction Z are perpendicular to one another.

The terms "forward", "rearward", "upward", "downward", rightward", and "leftward" mean "forward", "rearward", "upward", "downward", rightward", and "leftward" as seen from the rider mounted on the straddled vehicle 1. For reference, the drawings show forward, rearward, upward, downward, rightward, and leftward as appropriate.

Figs. 2 and 3 show a vehicle center plane C. The vehicle center plane C is an imaginary plane extending through the center of the straddled vehicle 1 and perpendicular to the transverse direction Y.

The straddled vehicle 1 is a scooter type vehicle. The straddled vehicle 1 has a body frame 3. Fig. 1 shows parts of the body frame 3 in broken lines. The body frame 3 includes a head tube 4 and a down frame 5. The head tube 4 is disposed at the front of the straddled vehicle 1. The head tube 4 is located on the vehicle center plane C (see Fig. 2). The down frame 5 is connected to the head tube 4. The down frame 5 extends downward and rearward from the head tube 4.

The straddled vehicle 1 has a steering device 11 and a front wheel 21. The steering device 11 is pivotably supported by the head tube 4. The steering device 11 supports the front wheel 21. The direction of the front wheel 21 changes with pivoting of the steering device 11. This changes the course taken by the straddled vehicle 1.

The steering device 11 has a steering shaft 12, a handlebar 13, a bracket 14, a pair of suspensions 15, and an axle 16. The steering shaft 12 is mounted in the head tube 4. The head tube 4 rotatably supports the steering shaft 12. The handlebar 13 extends in the transverse direction Y. The handlebar 13 is connected to the steering shaft 12 in a position higher than the head tube 4. The steering shaft 12 extends downward from the handlebar 13 through the head tube 4. The bracket 14 is connected to the steering shaft 12 in a position lower than the head tube 4. Each suspension 15 is connected to the bracket 14. Each suspension 15 extends downward from the bracket 14 (see Fig. 2). The axle 16 is supported by the pair of suspensions 15. The axle 16 is connected to a lower part of each suspension 15. The axle 16 rotatably supports the front wheel 21.

The straddled vehicle 1 has a right brake lever 18. The right brake lever 18 is attached to the handlebar 13. The handlebar 13 has a right grip portion 13R. The right grip portion 13R is located at a right end of the handlebar 13. The right brake lever 18 is disposed adjacent the right grip portion 13R. The right brake lever 18 is a brake operating element.

The straddled vehicle 1 has a master cylinder 19. The master cylinder 19 generates hydraulic pressure of a brake fluid in response to operation of the right brake lever 18. The master cylinder 19 is fixed to the handlebar 13. The master cylinder 19 is disposed adjacent the right grip portion 13R. The master cylinder 19 is also disposed adjacent the right brake lever 18.

The straddled vehicle 1 has a front wheel brake 23. The front wheel brake 23 is operable by the hydraulic pressure of the brake fluid. The front wheel brake 23 brakes the front wheel 21.

The front wheel brake 23 has a brake disk 24 and a caliper 25. The brake disk 24 is fixed to the front wheel 21. The brake disk 24 is rotatable with the front wheel 21. The caliper 25 is supported by the steering device 11. The caliper 25 is supported by one of the suspensions 15, for example. The caliper 25 brakes rotation of the brake disk 24 with the hydraulic pressure of the brake fluid. For example, the caliper 25 has brake pads (not shown) for contacting both sides of the brake disk 24. The brake pads are pressed on both sides of the brake disk 24 by the hydraulic pressure of the brake fluid. This brakes rotation of the brake disk 24.

The front wheel brake 23 is an example of the hydraulic brake according to the present teaching.

The straddled vehicle 1 has a hydraulic unit 27. The hydraulic unit 27 receives input of the hydraulic pressure generated by the master cylinder 19. The hydraulic unit 27 regulates the hydraulic pressure for braking to prevent lock tendency of the front wheel 21. The hydraulic unit 27 outputs a regulated hydraulic pressure to the front wheel brake 23 (caliper 25).

The number of channels provided for the hydraulic unit 27 is one. That is, the hydraulic unit 27 controls only one brake system (specifically, the brake system for the front wheel 21). Specifically, the number of master cylinders connected to the hydraulic unit 27 is one (master cylinder 19). In other words, the number of master cylinders which input the hydraulic pressure of the brake fluid to the hydraulic unit 27 is one. The number of brakes connected to the hydraulic unit 27 is one (front wheel brake 23). In other words, the number of brakes to which the hydraulic unit 27 outputs the hydraulic pressure of the brake fluid is one.

The hydraulic unit 27 is fixed to the head tube 4. The hydraulic unit 27 is located forward of the head tube 4. The hydraulic unit 27 does not overlap the head tube 4 in the side view of the vehicle (see Fig. 1).

The hydraulic unit 27 is located lower than the master cylinder 19. The hydraulic unit 27 is located higher than the front wheel brake 23.

The hydraulic unit 27 is located within a range in the up-down direction Z in which the head tube 4 is located. Specifically, the hydraulic unit 27 is located in a position lower than a top end 4t of the head tube 4 and higher than a bottom end 4b of the head tube 4.

The straddled vehicle 1 has appearance constituent members 31. Fig. 2 shows the appearance constituent members 31 in broken lines. Fig. 3 shows sections of the appearance constituent members 31 taken on line A-A of Fig. 1.

The appearance constituent members 31 are members which constitute an appearance of the straddled vehicle 1. The appearance constituent members 31 are arranged around the head tube 4. In this embodiment, the appearance constituent members 31 are composed of a cover member 6 and members attached to the cover member 6. In this embodiment, the appearance constituent members 31 include lamp units 33 in addition to the cover member 6.

The cover member 6 includes a front cover 32 and leg shields 7. The front cover 32 extends leftward and rearward from a leading edge 32a thereof. The front cover 32 also extends rightward and rearward from the leading edge 32a. The front cover 32 has openings formed therein for exposing the lamp units 33. The leg shields 7 are arranged behind the head tube 4. The leg shields 7 are connected to the front cover 32 in positions rightward and leftward of the head tube 4.

The lamp units 33 are attached to the front cover 32. The lamp units 33 have clear lenses exposed from the openings of the front cover 32. The lamp units 33 include headlights 34 and position lights 35. The headlights 34 include a right headlight 34R and a left headlight 34L (see Fig. 2). The position lights 35 include a right position light 35R and a left position light 35L (see Fig. 2).

Space is formed between the head tube 4 and appearance constituent members 31. This will be described particularly hereinafter.

The appearance constituent members 31 overlap the head tube 4 in the front view of the vehicle (see Fig. 2). The appearance constituent members 31 cover areas in front of the head tube 4.

The appearance constituent members 31 are arranged rightward and leftward of the head tube 4. The appearance constituent members 31 overlap the head tube 4 in the side view of the vehicle (see Fig. 1). The appearance constituent members 31 cover areas rightward and leftward of the head tube 4.

The hydraulic unit 27 is disposed in the space between the head tube 4 and appearance constituent members 31. In other words, the hydraulic unit 27 is disposed inward of the appearance constituent members 31. This will be described particularly hereinafter.

The appearance constituent members 31 are arranged in front of the hydraulic unit 27. The appearance constituent members 31 overlap the hydraulic unit 27 in the front view of the vehicle (see Fig. 2). The appearance constituent members 31 cover areas in front of the hydraulic unit 27.

The appearance constituent members 31 are arranged rightward and leftward of the hydraulic unit 27. The appearance constituent members 31 overlap the hydraulic unit 27 in the side view of the vehicle (see Fig. 1). The appearance constituent members 31 cover areas rightward and leftward of the hydraulic unit 27.

Reference is made to Fig. 1. The straddled vehicle 1 has a seat 36. The seat 36 is disposed rearward of the head tube 4. The rider of the straddled vehicle 1 sits on the seat 36, grasps the handlebar 13 (e.g. the right grip portion 13R), and operates the right brake lever 18.

The straddled vehicle 1 has a drive unit 37, a rear wheel 38, and a rear suspension 39. Although not shown, the drive unit 37 includes an engine for generating power, and a transmission for transmitting the power of the engine to the rear wheel 38. The drive unit 37 is disposed below the seat 36. The drive unit 37 has a front part thereof swingably supported by the body frame 3. The drive unit 37 has a rear part supporting the rear wheel 38. The drive unit 37 drives and rotates the rear wheel 38. The rear suspension 39 supports the rear part of the drive unit 37. One end of the rear suspension 39 is supported by the body frame 3. The other end of the rear suspension 39 is attached to the rear part of the drive unit 37.

### 2. Layout of hydraulic unit 27

Reference is made to Fig. 2. The center yc1 of the hydraulic unit 27 in the transverse direction Y is located rightward of the vehicle center plane C. That is, the center yc1 is not located on the vehicle center plane C, but is shifted from the vehicle center plane C. Consequently, a relatively large space S can be formed leftward of the hydraulic unit 27.

The hydraulic unit 27 is disposed in a position displaced from the vehicle center plane C. Specifically, the entire hydraulic unit 27 is located rightward of the vehicle center plane C. This can further enlarge the space S.

The hydraulic unit 27 overlaps the head tube 4 in the front view of the vehicle. The hydraulic unit 27 overlaps the head tube 4 in the plan view (see Fig. 3). Consequently, the hydraulic unit 27 can conveniently be fixed to the head tube 4.

Reference is made to Fig. 2. The hydraulic unit 27 has a first connector 28 and a second connector 29. The first connector 28 and second connector 29 are arranged on the same surface of the hydraulic unit 27. Specifically, the first connector 28 and second connector 29 are both arranged on an upper surface of the hydraulic unit 27. The first connector 28 and second connector 29 are arranged in the same height position.

The second connector 29 is disposed rightward of the first connector 28. In other words, the position of the second connector 29 in the transverse direction Y is located rightward of the position of the first connector 28 in the transverse direction Y.

The first connector 28 is located on the same side of the vehicle center plane C as the second connector 29. Specifically, the first connector 28 and second connector 29 are both arranged rightward of the vehicle center plane C.

The first connector 28 overlaps the head tube 4 in the front view of the vehicle. The second connector 29 does not overlap the head tube 4 in the front view of the vehicle.

Reference is made to Fig. 3. The first connector 28 and second connector 29 are arranged in a line along the transverse direction Y. The second connector 29 is located in the same position in the longitudinal direction X as the first connector 28. In other words, the position of the second connector 29 in the longitudinal direction X is the same as the position of the first connector 28 in the longitudinal direction X. The second connector 29 is located between the front end and rear end of the first connector 28.

### 3. Constructions of first piping and second piping

Reference is made to Fig. 3. The straddled vehicle 1 has first piping 41. The first piping 41 transmits the hydraulic pressure of the brake fluid. The first piping 41 is connected to the first connector 28. The first piping 41 has a first end 42 connected to the first connector 28.

The straddled vehicle 1 has second piping 51. The second piping 51 transmits the hydraulic pressure of the brake fluid. The second piping 51 is connected to the second connector 29. The second piping 51 has a second end 52 connected to the second connector 29.

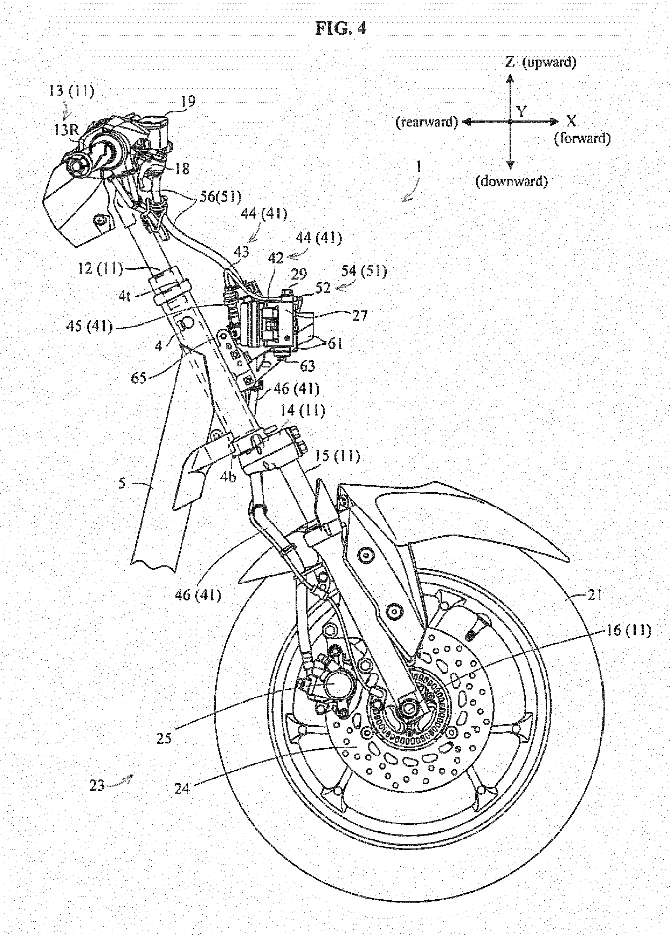

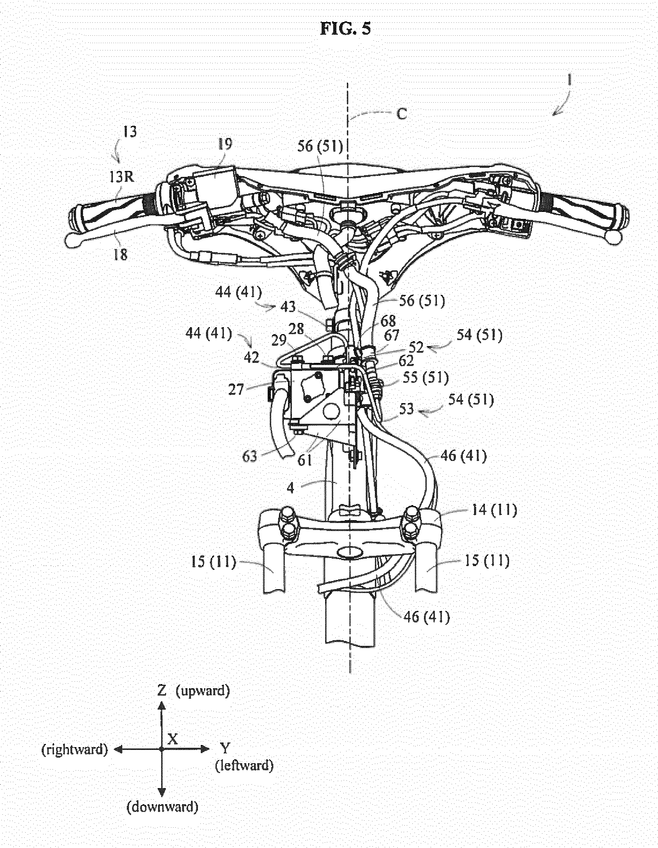

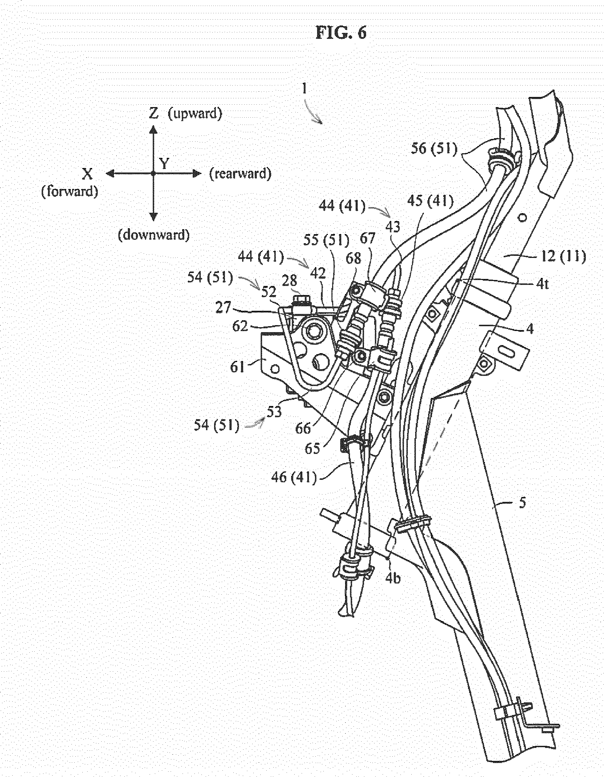

Fig. 4 is a right side view of the front portion of the straddled vehicle 1. Fig. 5 is a front view of a portion of the straddled vehicle 1. Fig. 6 is a left side view of a portion of the straddled vehicle 1. Figs. 4-6 omit illustration of the appearance constituent members 31.

Reference is made to Fig. 4. The first piping 41 is further connected to the front wheel brake 23 (caliper 25). The first piping 41 transmits the hydraulic pressure of the brake fluid from the hydraulic unit 27 to the front wheel brake 23 (caliper 25).

Reference is made to Figs. 3-6. The first piping 41 has a first proximal pipe 44, a first joint member 45, and a first distal pipe 46. The first proximal pipe 44, first joint member 45, and first distal pipe 46 are connected in this order.

The first proximal pipe 44 includes the first end 42. One end of the first proximal pipe 44 is the first end 42. The one end of the first proximal pipe 44 is connected to the first connector 28. The other end of the first proximal pipe 44 is connected to the first joint member 45.

The first joint member 45 is a straight type. The first joint member 45 has a short, approximately straight pipe shape. One end of the first joint member 45 is connected to the first proximal pipe 44. The other end of the first joint member 45 is connected to the first distal pipe 46.

The first distal pipe 46 has one end connected to the first joint member 45. The first distal pipe 46 has the other end connected to the front wheel brake 23 (caliper 25) (see Fig. 4).

Reference is made to Fig. 5. The second piping 51 is further connected to the master cylinder 19. The second piping 51 transmits the hydraulic pressure of the brake fluid from the master cylinder 19 to the hydraulic unit 27.

Reference is made to Figs. 3-6. The second piping 51 has a second proximal pipe 54, a second joint member 55, and a second distal pipe 56. The second proximal pipe 54, second joint member 55, and second distal pipe 56 are connected in this order.

The second proximal pipe 54 includes the second end 52. One end of the second proximal pipe 54 is the second end 52. The one end of the second proximal pipe 54 is connected to the second connector 29. The other end of the second proximal pipe 54 is connected to the second joint member 55.

The second joint member 55 is a straight type. The second joint member 55 has a short, approximately straight pipe shape. One end of the second joint member 55 is connected to the second proximal pipe 54. The other end of the second joint member 55 is connected to the second distal pipe 56.

The second distal pipe 56 has one end connected to the second joint member 55. The second distal pipe 56 has the other end connected to the master cylinder 19 (see Fig. 5).

The first proximal pipe 44 and second proximal pipe 54 do not have flexibility, respectively. The first proximal pipe 44 and second proximal pipe 54 are steel pipes, respectively, for example. The first proximal pipe 44 and second proximal pipe 54 are formed of metal, respectively, for example.

The first distal pipe 46 and second distal pipe 56 have flexibility, respectively. The first distal pipe 46 and second distal pipe 56 are rubber pipes, respectively, for example. When rubber pipes are employed, the rubber pipes have a larger diameter than the steel pipes.

The first proximal pipe 44, first joint member 45, second proximal pipe 54, and second joint member 55 are arranged in the space between the head tube 4 and appearance constituent members 31. Although not shown, these elements 44, 45, 54 and 55 overlap the appearance constituent members 31 in the front view and side view of the vehicle.

Part of the first distal pipe 46 (including the one end of the first distal pipe 46) and part of the second distal pipe 56 (including the one end of the second distal pipe 56) are arranged between the head tube 4 and appearance constituent members 31. The part of the first distal pipe 46 and the part of the second distal pipe 56 overlap the appearance constituent members 31 in the front view and side view of the vehicle.

### 4. Layout of first piping and second piping

The first piping 41 and second piping 51 are arranged, respectively, out of contact with the appearance constituent members 31. The first piping 41 and second piping 51 are arranged out of contact with each other.

The first end 42 and second end 52 will be described first.

Reference is made to Fig. 3. The first end 42 and second end 52 extend in mutually different directions. Specifically, the first end 42 extends rightward and rearward from the first connector 28, while the second end 52 extends leftward and forward from the second connector 29. The first end 42 and second end 52 extend in mutually opposite directions.

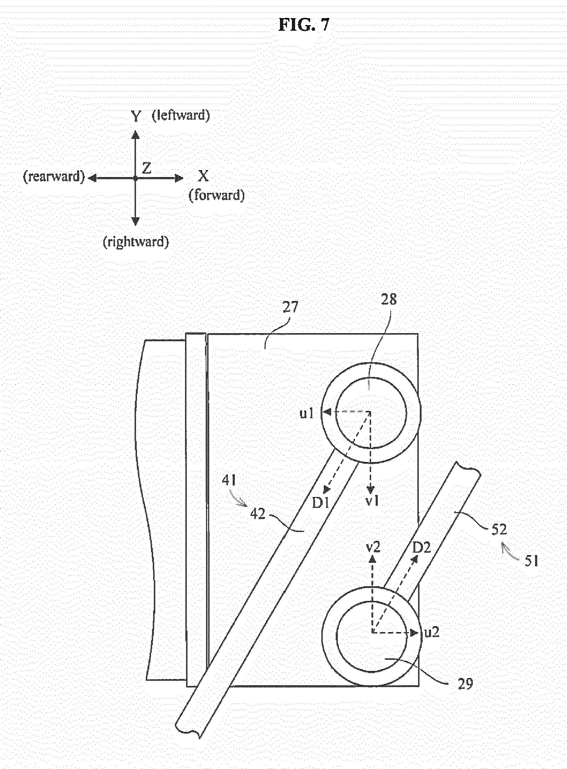

Fig. 7 is a plan view of the hydraulic unit 27, first end 42, and second end 52. The first end 42 and second end 52 have a linear shape, respectively. The first end 42 extends in a first direction D1 from the first connector 28. The second end 52 extends in a second direction D2 from the second connector 29.

The first direction D1 includes a component u1 in the longitudinal direction X, and a component v1 in the transverse direction Y. The second direction D2 includes a component u2 in the longitudinal direction X, and a component v2 in the transverse direction Y. Here, "the first direction D1 includes a component u1" means that the component u1 is not zero. The same applies to the other components v1, u2 and v2.

The components u1 and u2 have mutually opposite directions. The component u1 points rearward while the component u2 points forward.

The components v1 and v2 have mutually opposite directions. The component v1 points rightward while the component v2 points leftward.

When the directions of components u1 and u2 are different and the directions of components v1 and v2 are different, the first direction D1 and second direction D2 have a large difference. Specifically, in the plan view, the difference between the first direction D1 and second direction D2 is larger than 90 degrees.

The parts other than the first end 42 of the first piping 41 will be described.

Reference is made to Figs. 4 and 5. The first piping 41 extends upward from the first end 42, and thereafter changes the direction to extend downward. That is, the first piping 41 has an upwardly curved portion 43 which is curved to form an upward protuberance. The upwardly curved portion 43 is curved to bulge upward. The upwardly curved portion 43 has a substantially arcuate shape. The upwardly curved portion 43 is formed on the first proximal pipe 44. That is, the first proximal pipe 44 includes the upwardly curved portion 43.

The upwardly curved portion 43 is located in a position higher than any one of the first connector 28 and second connector 29. The upwardly curved portion 43 is located in a position higher than the hydraulic unit 27.

As the first piping 41 extends upward from the first end 42 toward the upwardly curved portion 43, the first piping 41 also extends leftward and rearward (see Fig. 3). As a result, as shown in Figs. 4 and 5, the upwardly curved portion 43 is located rearward of the hydraulic unit 27 and forward of the head tube 4. The upwardly curved portion 43 is located leftward of any one of the first connector 28 and second connector 29. The upwardly curved portion 43 is located leftward of the hydraulic unit 27.

Reference is made to Figs. 5 and 6. The first piping 41 extends downward from the upwardly curved portion 43 to a position lower than the hydraulic unit 27. The first piping 41 passes through an area on the left side of the hydraulic unit 27. The portion of the first piping 41 passing through the area leftward of the hydraulic unit 27 extends substantially in the up-down direction Z between a position higher than the hydraulic unit 27 and a position lower than the hydraulic unit 27. The portion of the first piping 41 passing through the area leftward of the hydraulic unit 27 is located forward of the head tube 4.

As the first piping 41 passes through the area leftward of the hydraulic unit 27, the first proximal pipe 44 is switched to the first distal pipe 46 by the first joint member 45. The first joint member 45 is located in substantially the same height position as an upper end of the hydraulic unit 27. The first joint member 45 is located rearward of the hydraulic unit 27. The first joint member 45 is located forward of the head tube 4. The first joint member 45 is placed in a substantially vertical posture. In other words, the first joint member 45 is placed in such a way that an imaginary line extending between one end and the other end of the first joint member 45 runs substantially parallel to the up-down direction Z. The first distal pipe 46 extends downward from the first joint member 45.

Reference is made to Fig. 3. The first joint member 45 is located leftward and rearward of the hydraulic unit 27. The first joint member 45 overlaps the head tube 4 in the plan view.

The first piping 41 extends further downward and reaches the front wheel brake 23 (caliper 25).

The parts other than the second end 52 of the second piping 51 will be described.

Reference is made to Figs. 3, 5 and 6. The second piping 51 extends leftward from the second end 52 to a position leftward of the hydraulic unit 27 (see Figs. 3 and 5). The second piping 51 then extends downward through an area leftward of the hydraulic unit 27, and thereafter changes the direction to extend upward (see Figs. 5 and 6). That is, the second piping 51 has a downwardly curved portion 53 which is curved to form a downward protuberance. The downwardly curved portion 53 is curved to bulge downward. The downwardly curved portion 53 has a substantially arcuate shape. The downwardly curved portion 53 is formed on the second proximal pipe 54. That is, the second proximal pipe 54 includes the downwardly curved portion 53.

Reference is made to Fig. 5. The downwardly curved portion 53 is located in a position lower than any one of the first connector 28 and second connector 29. The downwardly curved portion 53 is located in substantially the same height position as a lower end of the hydraulic unit 27. The downwardly curved portion 53 is located leftward of any one of the first connector 28 and second connector 29. The downwardly curved portion 53 is located leftward of the hydraulic unit 27.

Reference is made to Fig. 6. The downwardly curved portion 53 overlaps the hydraulic unit 27 in the side view of the vehicle. The downwardly curved portion 53 is located forward of the head tube 4. The downwardly curved portion 53 is located forward of the portion of the first piping 41 passing through the area leftward of the hydraulic unit 27.

Reference is made to Fig. 5. The second piping 51 extends upward from the downwardly curved portion 53 to a position higher than the hydraulic unit 27. The second piping 51 passes through an area leftward of the hydraulic unit 27. The portion of the second piping 51 passing through the area leftward of the hydraulic unit 27 extends substantially in the up-down direction Z between a position higher than the hydraulic unit 27 and a position lower than the hydraulic unit 27.

Reference is made to Fig. 6. The portion of the second piping 51 passing through the area leftward of the hydraulic unit 27 is located forward of the head tube 4. The portion of the second piping 51 passing through the area leftward of the hydraulic unit 27 is located forward of the portion of the first piping 41 passing through the area leftward of the hydraulic unit 27. That is, the portion of the first piping 41 passing through the area leftward of the hydraulic unit 27 and the portion of the second piping 51 passing through the area leftward of the hydraulic unit 27 are arranged in a line along the longitudinal direction X in the side view of the vehicle.

As the second piping 51 passes through the area leftward of the hydraulic unit 27, the second proximal pipe 54 is switched to the second distal pipe 56 by the second joint member 55. The second joint member 55 is located in substantially the same height position as the upper end of the hydraulic unit 27. The second joint member 55 overlaps the hydraulic unit 27 in the side view of the vehicle. The second joint member 55 is located rearward of any one of the first connector 28 and second connector 29. The second joint member 55 is located forward of the head tube 4. The second joint member 55 is placed in a substantially vertical posture. The second distal pipe 56 extends upward from the second joint member 55.

Reference is made to Fig. 3. The second joint member 55 is located leftward of the hydraulic unit 27. The second joint member 55 overlaps the head tube 4 in the plan view. The second joint member 55 is located forward of the first joint member 45.

Reference is made to Fig. 5. The second piping 51 extends further upward. When the second piping 51 reaches a height position substantially corresponding to the handlebar 13, the second piping 51 extends rightward and reaches the master cylinder 19. The master cylinder 19 is located rightward of the vehicle center plane C.

The first proximal pipe 44 and second proximal pipe 54 will be described.

Reference is made to Fig. 3. In the plan view, the first proximal pipe 44 and second proximal pipe 54 do not overlap. In other words, in the plan view, the first proximal pipe 44 and second proximal pipe 54 do not cross.

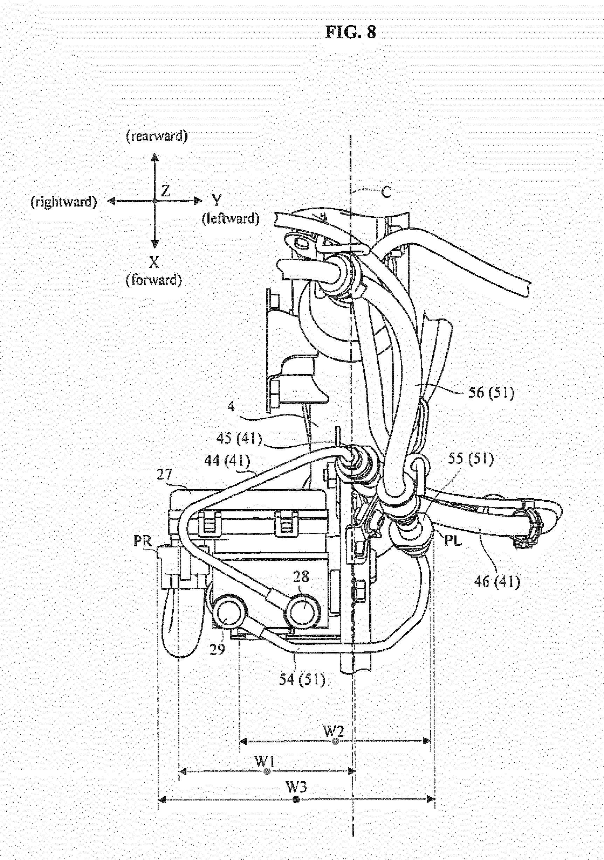

Fig. 8 is a plan view of the hydraulic unit 27, first piping 41, and second piping 51. Fig. 8 shows a range W1 in the transverse direction Y in which the first proximal pipe 44 is located. The first proximal pipe 44 is disposed within the range W1 in the transverse direction Y. The range W1 deviates rightward of the vehicle center plane C. That is, the range W1 has a midpoint thereof located rightward of the vehicle center plane C. In this embodiment, almost the whole of the range W1 is located rightward of the vehicle center plane C.

Fig. 8 shows a range W2 in the transverse direction Y in which the second proximal pipe 54 is located. The second proximal pipe 54 is disposed in the range W2 in the transverse direction Y. The range W2 deviates rightward of the vehicle center plane C. That is, the range W2 has a midpoint thereof located rightward of the vehicle center plane C.

Fig. 8 shows a right end PR of an entirety of the hydraulic unit 27, first joint member 45, and second joint member 55. Fig. 8 shows a left end PL of the entirety of the hydraulic unit 27, first joint member 45, and second joint member 55. The first joint member 45 is located leftward of the hydraulic unit 27, and the second joint member 55 is located leftward of the first joint member 45. The right end PR therefore corresponds to a right end of the hydraulic unit 27. The left end PL corresponds to a left end of the second joint member 55.

The first proximal pipe 44 and second proximal pipe 54 are arranged leftward of the right end PR, respectively. That is, the first proximal pipe 44 and second proximal pipe 54 do not protrude rightward of the hydraulic unit 27, respectively. Further, the first proximal pipe 44 and second proximal pipe 54 are arranged rightward of the left end PL, respectively.

The above arrangement will be described in a different expression. Fig. 8 shows a range W3 in the transverse direction Y in which the hydraulic unit 27, first joint member 45, and second joint member 55 are located. The hydraulic unit 27, first joint member 45, and second joint member 55 are arranged within the range W3 in the transverse direction Y. The range W1 and range W2 are included in the range W3. That is, the first proximal pipe 44 and second proximal pipe 54 are arranged within the range W3 in the transverse direction Y.

As described above, in the plan view, the hydraulic unit 27, first joint member 45, and second joint member 55 overlap the head tube 4, respectively. The range W3 in the transverse direction Y is therefore relatively small.

### 5. Support structure for hydraulic unit 27, first piping, and second piping

Reference is made to Figs. 3-6. The straddled vehicle 1 includes a stay 61 for supporting the hydraulic unit 27. The stay 61 is fixed to the head tube 4. The stay 61 extends forward from the head tube 4. The stay 61 is connected to a left surface of the hydraulic unit 27 by a fastening member 62. The stay 61 is connected to a lower surface of the hydraulic unit 27 by a fastening member 63. Thus, the stay 61 provides a cantilever support for the hydraulic unit 27. Consequently, the stay 61 can conveniently support the hydraulic unit 27 having the center yc1 thereof located rightward of the vehicle center plane C.

Reference is made to Fig. 6. The straddled vehicle 1 includes a first holding member 65 for holding the first piping 41. The first holding member 65 holds the first distal pipe 46. The first holding member 65 holds the end of the first distal pipe 46 connected to the first joint member 45. The first holding member 65 has an annular shape, and contacts an outer circumferential surface of the first piping 41. The first holding member 65 is connected to the stay 61 by a fastening member 66. Consequently, the first holding member 65 holds the first piping 41 in a predetermined position. That is, the first holding member 65 positions the first piping 41.

The straddled vehicle 1 includes a second holding member 67 for holding the second piping 51. The second holding member 67 holds the second distal pipe 56. The second holding member 67 holds the end of the second distal pipe 56 connected to the second joint member 55. The second holding member 67 has an annular shape, and contacts an outer circumferential surface of the second piping 51. The second holding member 67 is connected to the stay 61 by a fastening member 68. Consequently, the second holding member 67 holds the second piping 51 in a predetermined position. That is, the second holding member 67 positions the second piping 51.

The first holding member 65 and second holding member 67 are close to each other. The first holding member 65 and second holding member 67 are respectively arranged within the range in the up-down direction Z in which the head tube 4 is located. Specifically, the first holding member 65 is disposed in a position lower than the top end 4t of the head tube 4 and higher than the bottom end 4b of the head tube 4. The second holding member 67 is disposed in a position lower than the top end 4t of the head tube 4 and higher than the bottom end 4b of the head tube 4. In the side view of the vehicle, the first holding member 65 and second holding member 67 are arranged in a line in the up-down direction Z. Specifically, the second holding member 67 is disposed above the first holding member 65.

### 6. Operation

Operation relating to bending of the first piping 41 and second piping 51 will be described briefly. When the steering device 11 pivots relative to the head tube 4, the master cylinder 19 and front wheel brake 23 will pivot relative to the hydraulic unit 27. The first piping 41 (particularly the first distal pipe 46) will bend with the pivoting of the front wheel brake 23. The second piping 51 (particularly the second distal pipe 56) will bend with the pivoting of the master cylinder 19.

At this time, the smaller distance from the head tube 4 (more particularly a central axis of the head tube 4 or an axis of rotation of the steering device 11) to the first holding member 65 results in the smaller variation length of the first piping 41. Similarly, the smaller distance from the head tube 4 to the second holding member 67 results in the smaller variation length of the second piping 51. In this embodiment, the first holding member 65 and second holding member 67 are arranged in positions closer to the head tube 4 than to the right end PR of the hydraulic unit 27. The right end PR of the hydraulic unit 27 corresponds to one end of the hydraulic unit 27 farthest from the head tube 4. This provides the short variation lengths of the first piping 41 and second piping 51 caused by the pivoting of the steering device 11. Therefore, even when the steering device 11 pivots relative to the head tube 4, the first piping 41 and second piping 51 do not easily interfere with each other.

### 7. Advantageous effects

The straddled vehicle 1 according to the embodiment produces the following effects.

Since the center yc1 of the hydraulic unit 27 in the transverse direction Y is located rightward of the vehicle center plane C, the relatively large space S can be formed leftward of the hydraulic unit 27. The space S can easily accommodate components ("other components") other than the hydraulic unit 27. Thus, the hydraulic unit 27 can be placed efficiently in the space between the head tube 4 and appearance constituent members 31.

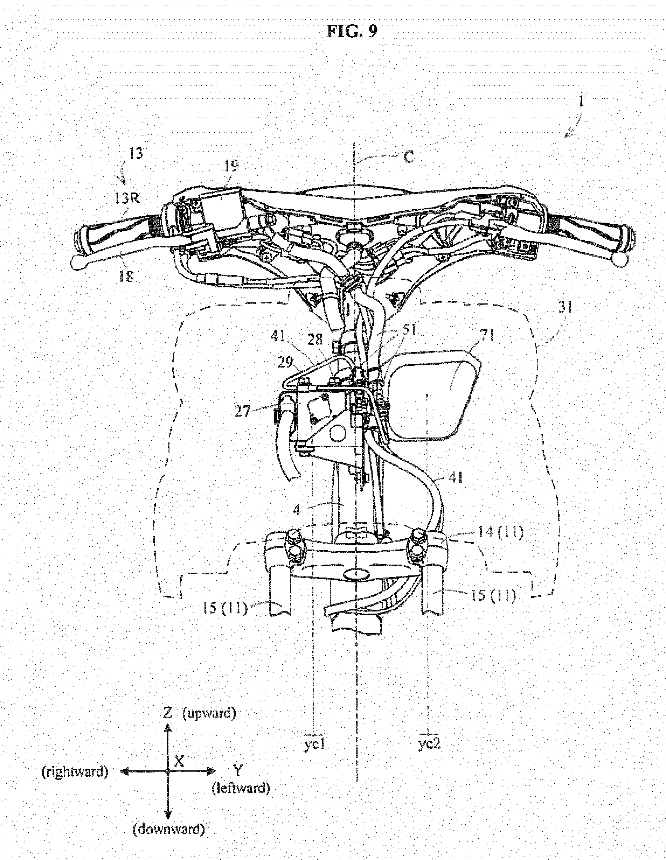

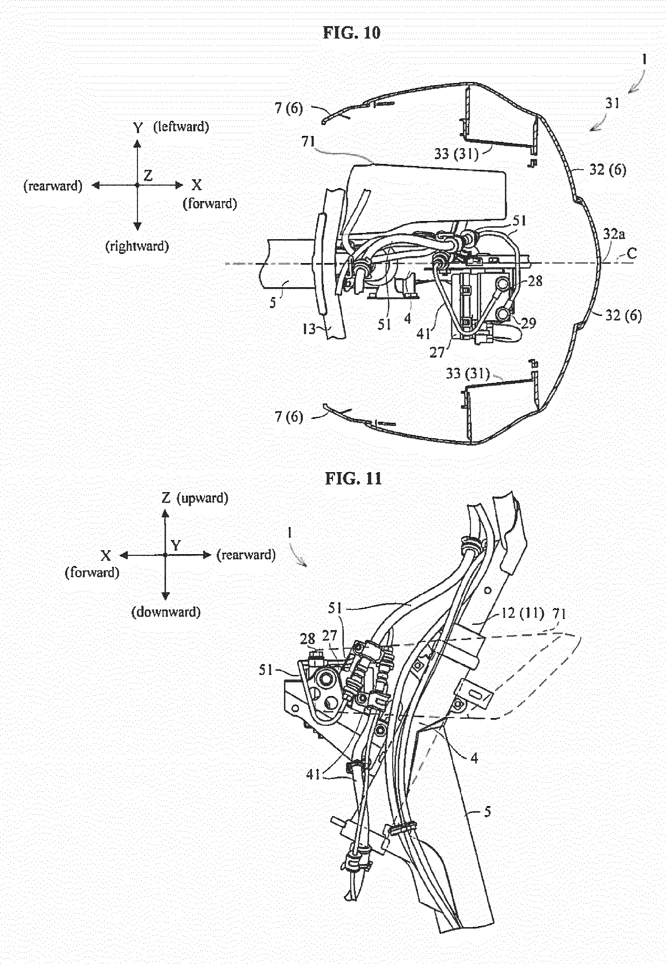

An example of installing other components in the space S will be described. Fig. 9 is a front view of a portion of the straddled vehicle 1. Fig. 10 is a plan view of the front portion of the straddled vehicle. Fig. 11 is a left side view of the front portion of the straddled vehicle. Fig. 9 shows the appearance constituent members 31 in a dotted line. Fig. 10 shows sections of the appearance constituent members 31 taken on line A-A of Fig. 1. Fig. 11 omits illustration of the appearance constituent members 31.

The straddled vehicle 1 includes a storage unit 71 for storing accessories and other articles. The storage unit 71 is disposed in the space between the head tube 4 and appearance constituent members 31. Specifically, the appearance constituent members 31 are located forward of the storage unit 71. The appearance constituent members 31 overlap the storage unit 71 in the front view of the vehicle (see Fig. 9). The appearance constituent members 31 cover an area in front of the storage unit 71. The appearance constituent members 31 are located rightward and leftward of the storage unit 71. The appearance constituent members 31 overlap the storage unit 71 in side views of the vehicle. The appearance constituent members 31 cover areas rightward and leftward of the storage unit 71.

Reference is made to Fig. 9. The storage unit 71 has a center yc2 thereof in the transverse direction Y, which is located leftward of the vehicle center plane C. The center yc2 is located in the opposite side to the center yc1 across the vehicle center plane C. Consequently, the hydraulic unit 27 and storage unit 71 can be arranged conveniently.

The storage unit 71 is a relatively large member. The storage unit 71 is relatively long in the longitudinal direction X. The storage unit 71 has a portion located forward of the head tube 4 and a portion located rearward of the head tube 4 (see Figs. 10 and 11). Thus, even when the storage unit 71 is relatively large, the storage unit 71 can be positioned conveniently. In other words, the storage unit 71 can easily be increased in size.

The center yc1 of the hydraulic unit 27 in the transverse direction Y is located rightward of the vehicle center plane C. The appearance constituent members 31 are therefore located close to the right side of the hydraulic unit 27. The first piping 41 and second piping 51 are installed in positions closer to the right parts of the appearance constituent members 31 than to the left parts of the appearance constituent members 31. The first connector 28 is located leftward of the second connector 29. The first connector 28 is therefore farther than the second connector 29 from the right parts of the appearance constituent members 31. The first end 42 extends in the first direction D1 from the first connector 28. The component v1 in the transverse direction Y of the first direction D1 points rightward. The first end 42 extends rightward from the first connector 28. That is, the first end 42 extends in a direction toward the right parts of the appearance constituent members 31. Since the first connector 28 is farther than the second connector 29 from the right parts of the appearance constituent members 31 even if the first end 42 extends rightward from the first connector 28, the first piping 41 can be arranged appropriately. For example, the radius of curvature of the first piping 41 can easily be enlarged. For example, the first piping 41 can easily be extended in the transverse direction Y. For example, the first piping 41 can easily be extended in the up-down direction Z and longitudinal direction X also. Thus, the first piping 41 can be arranged appropriately, while conveniently avoiding the first piping 41 contacting the right parts of the appearance constituent members 31.

Similarly, the second connector 29 is located rightward of the first connector 28. The second connector 29 is therefore closer than the first connector 28 to the right parts of the appearance constituent members 31. The second end 52 extends in the second direction D2 from the second connector 29. The component v2 in the transverse direction Y of the second direction D2 points leftward. The second end 52 extends leftward from the second connector 29. That is, the second end 52 extends in a direction away from the right parts of the appearance constituent members 31. Even if the second connector 29 is closer than the first connector 28 to the right parts of the appearance constituent members 31, since the second end 52 extends leftward from the second connector 29, the second piping 51 can be arranged appropriately. For example, the radius of curvature of the second piping 51 can easily be enlarged. For example, the second piping 51 can easily be extended in the transverse direction Y. For example, the second piping 51 can easily be extended in the up-down direction Z and longitudinal direction X also. Thus, the second piping 51 can be arranged appropriately, while conveniently avoiding the second piping 51 contacting the appearance constituent members 31.

In this embodiment, as described above, the first end 42 extends rightward, and the second end 52 leftward. According to this embodiment, compared with the case where the first end 42 extends leftward and/or the second end 52 rightward, the first piping 41 and second piping 51 can be arranged appropriately without contacting the appearance constituent members 31.

Moreover, since the component v1 and component v2 point in opposite directions, the first end 42 and second end 52 do not extend in the same direction. The first end 42 and second end 52 can therefore be conveniently inhibited from contacting each other, Thus, the first piping 41 and second piping 51 can be arranged appropriately. This also facilitates operation to install the first piping 41 and second piping 51.

Since the first end 42 is connected to the first connector 28, the position of the first end 42 can be set easily. Similarly, since the second end 52 is connected to the second connector 29, the position of the second end 52 can be set easily. The first piping 41 and second piping 51 can therefore be inhibited from contacting each other all the more conveniently.

The component u1 in the longitudinal direction X of the first direction D1 points opposite to the component u2 in the longitudinal direction X of the second direction D2. Consequently, the first direction D1 and second direction D2 have a large difference. The first piping 41 and second piping 51 can therefore be inhibited from contacting each other all the more conveniently.

The first connector 28 and second connector 29 are arranged on the same surface (specifically, the upper surface) of the hydraulic unit 27. The first end 42 and second end 52 are therefore all the closer to each other. Since the first end 42 and second end 52 are appropriately arranged, even if the first end 42 and second end 52 are close to each other, the first end 42 and second end 52 can conveniently be inhibited from mutual interference. The first piping 41 and second piping 51 can therefore be arranged all the more appropriately.

Both the first connector 28 and second connector 29 are located on one side of the vehicle center plane C. Therefore, the portion (e.g. the first proximal pipe 44) of the first piping 41 located adjacent the hydraulic unit 27 can easily be installed on one side of the vehicle center plane C. Similarly, the portion (e.g. the second proximal pipe 54) of the second piping 51 located adjacent the hydraulic unit 27 can easily be installed on one side of the vehicle center plane C. Thus, the portion of the first piping 41 and the portion of the second piping 51 adjacent the hydraulic unit 27 can easily be shifted to one side of the vehicle center plane C. Or the portion of the first piping 41 and the portion of the second piping 51 adjacent the hydraulic unit 27 can be installed together on one side of the vehicle center plane C. Specifically, each of the range W1 in the transverse direction Y in which the first proximal pipe 44 is located and the range W2 in the transverse direction Y in which the second proximal pipe 54 is located can easily be made to deviate to one side of the vehicle center plane C. Consequently, the portion of the first piping 41 and the portion of the second piping 51 adjacent the hydraulic unit 27 can be arranged efficiently in the space between the head tube 4 and appearance constituent members 31.

Especially the first connector 28 and second connector 29 are both located on the same side of the vehicle center plane C as the center yc1. The hydraulic unit 27, and the portion of the first piping 41 and the portion of the second piping 51 adjacent the hydraulic unit 27, can therefore be arranged efficiently. As a result, the space S leftward of the hydraulic unit 27 can conveniently be inhibited from being reduced in size by the portion of the first piping 41 and the portion of the second piping 51 adjacent the hydraulic unit 27.

The first proximal pipe 44 and second proximal pipe 54 are arranged leftward of the right end PR of the entirety of the hydraulic unit 27, first joint member 45, and second joint member 55, and are arranged rightward of the left end PL of the entirety of the hydraulic unit 27, first joint member 45, and second joint member 55. Further, each of the first joint member 45 and second joint member 55 overlaps the head tube 4 in the plan view. The hydraulic unit 27, first proximal pipe 44, second proximal pipe 54, first joint member 45, and second joint member 55 can therefore be arranged efficiently. As a result, the space S leftward of the hydraulic unit 27 can conveniently be inhibited from being reduced in size by the first proximal pipe 44, second proximal pipe 54, first joint member 45, and second joint member 55.

Further, the hydraulic unit 27 overlaps the head tube 4 in the plan view. The hydraulic unit 27, first proximal pipe 44, second proximal pipe 54, first joint member 45, and second joint member 55 can therefore be arranged all the more efficiently.

The portion of the first piping 41 and the portion of the second piping 51 passing through the area leftward of the hydraulic unit 27 are arranged in a line along the longitudinal direction X in the side view of the vehicle. Consequently, the portion of the first piping 41 and the portion of the second piping 51 adjacent the hydraulic unit 27 can be arranged all the more efficiently.

The first joint member 45 and second joint member 55 are arranged in a line along the longitudinal direction X leftward of the hydraulic unit 27. Consequently, the portion of the first piping 41 and the portion of the second piping 51 adjacent the hydraulic unit 27 can be arranged all the more efficiently.

The first proximal pipe 44 and second proximal pipe 54 do not overlap in the plan view. This can reliably prevent the first proximal pipe 44 and second proximal pipe 54 from contacting each other.

The first proximal pipe 44 and second proximal pipe 54 do not have flexibility, respectively. This can prevent with increased reliability the first proximal pipe 44 and second proximal pipe 54 from contacting each other.

The first piping 41 has the upwardly curved portion 43 which is located in the position higher than any one of the first connector 28 and second connector 29. This can further increase the length of the first piping 41 (specifically, the first distal pipe 46). The first piping 41 can therefore conveniently bend with pivoting of the front wheel brake 23.

The first distal pipe 46 has flexibility. The first distal pipe 46 can therefore conveniently bend with pivoting of the front wheel brake 23.

The second piping 51 has the downwardly curved portion 53 which is located in the position lower than any one of the first connector 28 and second connector 29. This can further increase the length of the second piping 51 (specifically, the second distal pipe 56). The second piping 41 can therefore conveniently bend with pivoting of the master cylinder 19.

The second distal pipe 56 has flexibility. The second distal pipe 56 can therefore conveniently bend with pivoting of the master cylinder 19.

The number of master cylinders connected to the hydraulic unit 27 is one (master cylinder 19), and the number of brakes connected to the hydraulic unit 27 is one (front wheel brake 23). The number of pipes connected to the hydraulic unit 27 can therefore be kept down. Specifically, the pipes connected to the hydraulic unit 27 are only the first piping 41 and second piping 51. This can further reduce in size the installation space of the piping connected to the hydraulic unit 27.

The first holding member 65 and second holding member 67 are located close to each other. This enables operations for detaching and attaching the first holding member 65 and operations for detaching and attaching the second holding member 67 to be performed without changing working posture.

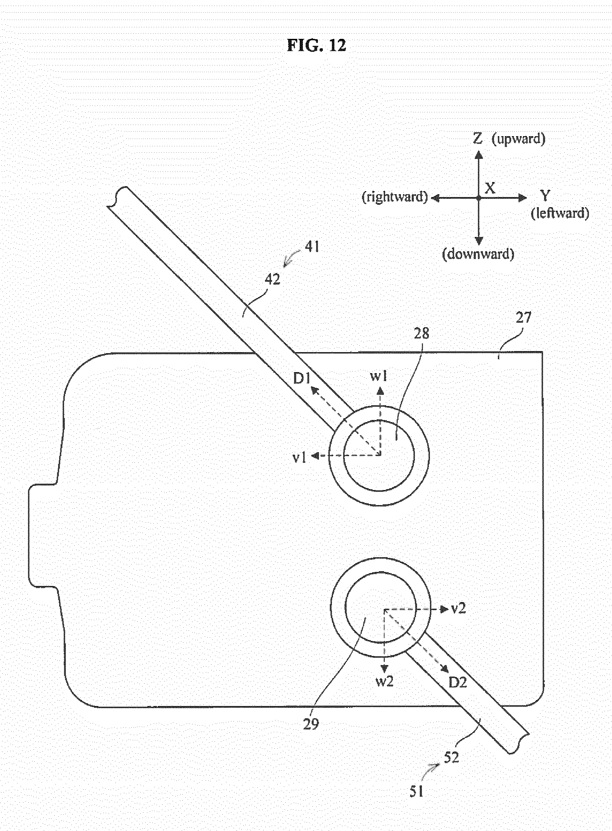

The foregoing embodiment may be modified as follows:
(1) In the foregoing embodiment, the center yc1 is located rightward of the vehicle center plane C. The center yc1 may be located leftward of the vehicle center plane C. According to this modified embodiment, a relatively large space can be formed rightward of the hydraulic unit 27.
   In this modified embodiment, the first connector 28 may be disposed closer than the second connector 29 to the appearance constituent members 31. Specifically, in this modified embodiment, when the first connector 28 is disposed leftward of the second connector 29, the first connector 28 is closer than the second connector 29 to the appearance constituent members 31. Since, in this case also, the first end 42 extends rightward from the first connector 28, the first piping 41 can be prevented from contacting the appearance constituent members 31, and the radius of curvature of the first piping 41 can be inhibited from becoming too small. Further, since the second end 52 extends leftward from the second connector 29, the first piping 41 and second piping 51 can conveniently be inhibited from contacting each other.
(2) In the foregoing embodiment, the hydraulic unit 27 overlaps the head tube 4 in the front view of the vehicle. The hydraulic unit 27 may be placed in a position not overlapping the head tube 4 in the front view of the vehicle.
(3) In the foregoing embodiment, the second connector 29 is disposed rightward of the first connector 28. For example, the second connector 29 may be placed in the same position in the transverse direction Y as the first connector 28. In other words, the position of the second connector 29 in the transverse direction Y may be the same as the position of the first connector 28 in the transverse direction Y. In this modified embodiment also, each of the first piping 41 and second piping 51 can conveniently be prevented from contacting the appearance constituent members 31. Further, the first piping 41 and second piping 51 can conveniently be prevented from contacting each other.
   For example, the first connector 28 and second connector 29 may be arranged in a line along the longitudinal direction X. In this case, the first connector 28 may be disposed forward of the second connector 29. Or the first connector 28 may be disposed rearward of the second connector 29.
   For example, the first connector 28 and second connector 29 may be arranged in a line along the up-down direction Z. In this case, the first connector 28 may be disposed higher than the second connector 29 (see Fig. 12 which will be described hereinafter). Or the first connector 28 may be disposed lower than the second connector 29.
(4) In the foregoing embodiment, both the first connector 28 and second connector 29 are arranged on the upper surface of the hydraulic unit 27. For example, both the first connector 28 and second connector 29 may be arranged on the lower surface, front surface, rear surface, right surface, or left surface of the hydraulic unit 27.
(5) In the foregoing embodiment, both the first connector 28 and second connector 29 are arranged on the same surface of the hydraulic unit 27. The first connector 28 may be disposed on a first surface of the hydraulic unit 27, and the second connector 29 disposed on a second surface different from the first surface of the hydraulic unit 27.
(6) in the foregoing embodiment, both the first connector 28 and second connector 29 are arranged rightward of the vehicle center plane C. For example, both the first connector 28 and second connector 29 may be arranged leftward of the vehicle center plane C. For example, the first connector 28 may be disposed on one side of the vehicle center plane C, and the second connector 29 on the other side of the vehicle center plane C. Or at least one of the first connector 28 and second connector 29 may be disposed on the vehicle center plane C.
(7) In the foregoing embodiment, the component u1 in the longitudinal direction X of the first direction D1 points opposite to the component u2 in the longitudinal direction X of the second direction D2. The component u1 and component u2 may point in the same direction.
(8) In the foregoing embodiment, the first direction D1 includes the component u1 in the longitudinal direction X. The first direction D1 does not need to include a component in the longitudinal direction X. That is, the component u1 may be zero. Similarly, in the foregoing embodiment, the second direction D2 includes the component u2 in the longitudinal direction X. The second direction D2 does not need to include a component in the longitudinal direction X.
(9) Although not particularly described in the foregoing embodiment, the first direction D1 may include a component in the up-down direction Z. Or the first direction D1 does not need to include a component in the up-down direction Z. Similarly, in the foregoing embodiment, the second direction D2 may include a component in the up-down direction Z. Or the second direction D2 does not need to include a component in the up-down direction Z.
   Fig. 12 is a front view of the hydraulic unit 27, first end 42, and second end 52 according to a modified embodiment. Components identical to those of the embodiment are shown with the same signs, and will not particularly be described.
   The first connector 28 and second connector 29 are arranged on the front surface of the hydraulic unit 27. The first connector 28 and second connector 29 are arranged in a line along the up-down direction Z. The first connector 28 is disposed in a position higher than the second connector 29. The second connector 29 is disposed in the same position in the transverse direction Y as the first connector 28. That is, the position of the second connector 29 in the transverse direction Y is the same as the position of the first connector 28 in the transverse direction Y.
   The first end 42 extends in a first direction D1 from the first connector 28. The first direction D1 includes a component v1 in the transverse direction Y, and a component w1 in the up-down direction Z. The component v1 points rightward, and the component w1 upward. The second end 52 extends in a second direction D2 from the second connector 29. The second direction D2 includes a component v2 in the transverse direction Y, and a component w2 in the up-down direction Z. The component v2 points leftward, and the component w2 downward.
   Since the component v1 points rightward, it can conveniently avoid the first piping 41 contacting the appearance constituent members 31. Since the component v2 points leftward, it can conveniently avoid the second piping 51 contacting the appearance constituent members 31. Since the component v1 and component v2 point opposite to each other, it can conveniently avoid the first piping 41 and second piping 51 contacting each other. Thus, the first piping 41 and second piping 51 can be arranged appropriately.
   Since the components v1 and v2 point in different directions and the components w1 and w2 point in different directions, the first direction D1 greatly differs from the second direction D2. Specifically, in the front view of the vehicle, the difference between the first direction D1 and second direction D2 is larger than 90 degrees. The first piping 41 and second piping 51 can therefore be arranged all the more appropriately.
   In the above modified embodiment, the component w1 and component w2 point opposite to each other. For example, the component w1 and component w2 may point in the same direction.
(10) In the foregoing embodiment, the first piping 41 is connected to the front wheel brake 23 (caliper 25), while the second piping 51 is connected to the master cylinder 19. The first piping 41 may be connected to the master cylinder 19, and the second piping 51 to the front wheel brake 23 (caliper 25).
(11) In the foregoing embodiment, the first piping 41 is connected to the front wheel brake 23 (caliper 25). The first piping 41 may be connected to a rear wheel brake (not shown) for braking the rear wheel 38. According to this modified embodiment, the hydraulic unit 27 can control a brake system for the rear wheel 38.
(12) In the foregoing embodiment, the first proximal pipe 44 does not have flexibility. The first proximal pipe 44 may have flexibility. In the foregoing embodiment, the material for forming the first proximal pipe 44 is different from the material for forming the first distal pipe 46. The material for forming the first proximal pipe 44 may be the same as the material for forming the first distal pipe 46.
   Similarly, in the foregoing the embodiment, the second proximal pipe 54 does not have flexibility. The second proximal pipe 54 may have flexibility. In the foregoing embodiment, the material for forming the second proximal pipe 54 is different from the material for forming the second distal pipe 56. The material for forming the second proximal pipe 54 may be the same as the material for forming the second distal pipe 56.
(13) In the foregoing embodiment, the first piping 41 includes the first proximal pipe 44, first joint member 45, and first distal pipe 46. The first piping 41 may consist of a single pipe and omit the first joint member 45. Similarly, the second piping 51 includes the second proximal pipe 54, second joint member 55, and second distal pipe 56. The second piping 51 may consist of a single pipe and omit the second joint member 55.
(14) In the foregoing embodiment, the front wheel brake 23 is a hydraulic brake of the disk brake type. For example, the front wheel brake 23 may be changed to a different type of hydraulic brake. For example, the front wheel brake 23 may be a hydraulic brake of the drum type.
(15) In the foregoing embodiment, the master cylinder 19 is disposed rightward of the vehicle center plane C. The master cylinder 19 may be disposed leftward of the vehicle center plane C.
(16) In the foregoing embodiment, the appearance constituent members 31 include the front cover 32 and lamp units 33. For example, the appearance constituent members 31 may further include other members. Or the appearance constituent members 31 do not need to include the lamp units 33. For example, the appearance constituent member 31 may consist of only the front cover 32.
(17) The foregoing embodiment illustrates an example where both the front cover 32 and lamp units 33 (headlights 34) overlap the head tube 4 in the front view of the vehicle. Among the appearance constituent members 31, for example, only either the front cover 32 or the lamp units 33 may overlap the head tube 4 in the front view of the vehicle.
(18) In the foregoing embodiment, the lamp units 33 include the headlights 34 and position lights 35. The lamp units 33 may also include flashers. Or the lamp units 33 may include at least one of the headlights 34, position lights 35, or flashers.
(19) In the foregoing embodiment, a scooter type vehicle has been described as an example of straddled vehicle 1. The straddled vehicle 1 may be changed to other types of vehicle such as the moped type, street type, sport type, and all-terrain vehicle.

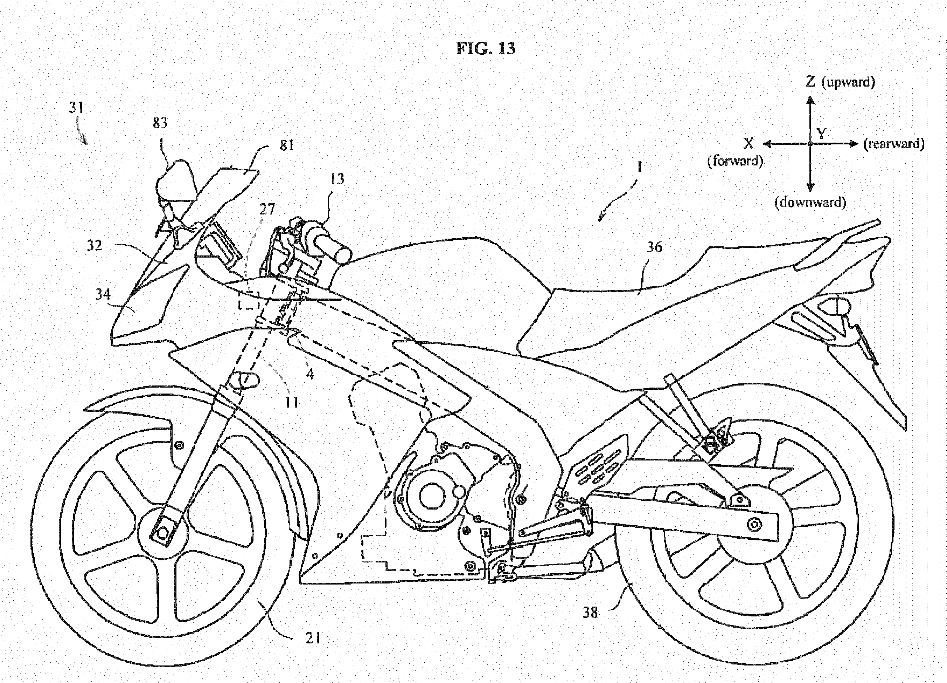

   Fig. 13 is a left side view of a straddled vehicle according to a modified embodiment. Components identical to those of the embodiment are shown with the same signs, and will not particularly be described.
   The straddled vehicle 1 according to the modified embodiment is a street type vehicle. The rider sits astride on the seat 36 of the straddled vehicle 1.
   In the modified embodiment, the appearance constituent members 31 include the front cover 32, headlights 34, a windshield 81, and a rearview mirror 83. The hydraulic unit 27 is disposed between the head tube 4 and appearance constituent members 31.
(20) In the foregoing embodiment, the number of front wheels 21 is one. The number of front wheels 21 may be changed to two. In the foregoing embodiment, the number of rear wheels 38 is one. The number of rear wheels 38 may be changed to two.
(21) The foregoing embodiment illustrates the engine (internal combustion engine) as an example of the source of power. For example, the straddled vehicle 1 may have an electric motor as the source of power.
(22) In the foregoing embodiment, the hydraulic unit 27 is disposed within the range in the up-down direction Z in which the head tube 4 is located. For example, the hydraulic unit 27 may be disposed in a position higher than the top end 4t of the head tube 4. Or the hydraulic unit 27 may be disposed in a position lower than the bottom end 4b of the head tube 4.

## Claims

1. A straddled vehicle (1) comprising:
a head tube (4);
a steering device (11) pivotably supported by the head tube (4);
a hydraulic unit (27) fixed to the head tube (4), and including a first connector (28), and a second connector (29) disposed in the same position as the first connector (28) in a transverse direction (Y) of the straddled vehicle (1) or in a position rightward of the first connector (28);
first piping (41) connected to the first connector (28);
second piping (51) connected to the second connector (29);
a master cylinder (19) disposed higher than the hydraulic unit (27), fixed to the steering device (11), and connected to one of the first piping (41) and the second piping (51);
a hydraulic brake (23) disposed lower than the hydraulic unit (27), and connected to the other of the first piping (41) and the second piping (51); and
an appearance constituent member (31) disposed in front of the hydraulic unit (27), and disposed rightward and leftward of the hydraulic unit (27);
wherein
the hydraulic unit (27) has a center (yc1) thereof in the transverse direction (Y), the center (yc1) being located in one of directions rightward and leftward of a vehicle center plane (C) extending through a center of the straddled vehicle (1) and perpendicular to the transverse direction (Y); the vehicle being **characterized in that**
the first piping (41) has a first end (42) connected to the first connector (28), the first end (42) extending in a first direction (D1) from the first connector (28);
the first direction (D1) includes a component (v1) in the transverse direction (Y);
the component (v1) in the transverse direction (Y) of the first direction (D1) points rightward;
the second piping (51) has a second end (52) connected to the second connector (29), the second end (52) extending in a second direction (D2) from the second connector (29);
the second direction (D2) includes a component (v2) in the transverse direction (Y); and
the component (v2) in the transverse direction (Y) of the second direction (D2) points leftward.

2. The straddled vehicle (1) according to claim 1, wherein:
the first direction (D1) includes a component (u1) in a longitudinal direction (X) of the straddled vehicle (1);
the second direction (D2) includes a component (u2) in the longitudinal direction (X); and
the component (u1) in the longitudinal direction (X) of the first direction (D1) points opposite to the component (u2) in the longitudinal direction (X) of the second direction (D2).

3. The straddled vehicle (1) according to claim 1 or 2, wherein:
the first direction (D1) includes a component (w1) in an up-down direction (Z) of the straddled vehicle (1);
the second direction (D2) includes a component (w2) in the up-down direction (Z); and
the component (w1) in the up-down direction (Z) of the first direction (D1) points opposite to the component (w2) in the up-down direction (Z) of the second direction (D2).

4. The straddled vehicle (1) according to any one of claims 1 to 3, wherein the first connector (28) and the second connector (29) are arranged on the same surface of the hydraulic unit (27).

5. The straddled vehicle (1) according to any one of claims 1 to 4, wherein the first connector (28) and the second connector (29) are both located in one of the directions rightward and leftward of the vehicle center plane (C).

6. The straddled vehicle (1) according to any one of claims 1 to 5, wherein:
the first piping (41) has:
a first proximal pipe (44) including the first end (42);
a first joint member (45) connected to the first proximal pipe (44); and
a first distal pipe (46) connected to the first joint member (45); and
the second piping (51) has:
a second proximal pipe (54) including the second end (52);
a second joint member (55) connected to the second proximal pipe (54); and
a second distal pipe (56) connected to the second joint member (55); and
wherein the first proximal pipe (44) and the second proximal pipe (54) do not overlap in plan view.

7. The straddled vehicle (1) according to claim 6, wherein:
the first joint member (45) overlaps the head tube (4) in plan view;
the second joint member (55) overlaps the head tube (4) in plan view; and
the first proximal pipe (44) and the second proximal pipe (54) are arranged leftward of a right end (PR) of an entirety of the hydraulic unit (27), the first joint member (45), and the second joint member (55), and rightward of a left end (PL) of the entirety of the hydraulic unit (27), the first joint member (45), and the second joint member (55).

8. The straddled vehicle (1) according to any one of claims 1 to 7, wherein:
the number of the master cylinder (19) to which the hydraulic unit (27) is connected is one; and
the number of the hydraulic brake (23) to which the hydraulic unit (27) is connected is one.

9. The straddled vehicle (1) according to any one of claims 1 to 8, wherein:
one of the first piping (41) and the second piping (51) connected to the master cylinder (19) has a downwardly curved portion (53) which is curved to form a downward protuberance; and
the downwardly curved portion (53) is located in a position lower than any one of the first connector (28) and the second connector (29).

10. The straddled vehicle (1) according to any one of claims 1 to 9, wherein:
the other of the first piping (41) and the second piping (51) connected to the hydraulic brake (23) has an upwardly curved portion (43) which is curved to form an upward protuberance; and
the upwardly curved portion (43) is located in a position higher than any one of the first connector (28) and the second connector (29).

11. The straddled vehicle (1) according to any one of claims 1 to 10, comprising a storage unit (71) disposed to overlap the hydraulic unit (27) in a side view of the vehicle; wherein the storage unit (71) has a center (yc2) thereof in the transverse direction (Y), which center (yc2) is located opposite, across the vehicle center plane (C), to the center (yc1) of the hydraulic unit (27) in the transverse direction (Y).

12. The straddled vehicle (1) according to any one of claims 1 to 11, comprising:
a first holding member (65) for holding the first piping (41), the first holding member (65) being disposed in a position lower than a top end (4t) of the head tube (4) and higher than a bottom end (4b) of the head tube (4); and
a second holding member (67) for holding the second piping (51), the second holding member (67) being disposed in a position lower than the top end (4t) of the head tube (4) and higher than the bottom end (4b) of the head tube (4);
wherein the first holding member (65) and the second holding member (67) are arranged in a line in an up-down direction (Z) in a side view of the vehicle.

13. The straddled vehicle (1) according to any one of claims 1 to 11, comprising:
a first holding member (65) supported by the head tube (4) for holding the first piping (41); and
a second holding member (67) supported by the head tube (4) for holding the second piping (51);
wherein at least one of the first holding member (65) and the second holding member (67) is disposed in a position closer to the head tube (4) than one end (PR) of the hydraulic unit (27) farthest from the head tube (4).

## Patentansprüche

1. Ein Spreiz-Sitz-Fahrzeug (1), das umfasst:
ein Kopf-Rohr (4);
eine Lenk-Vorrichtung (11), die schwenkbar durch das Kopf-Rohr (4) gelagert ist;
eine Hydraulik-Einheit (27), die an dem Kopf-Rohr (4) fixiert ist und einen ersten Verbinder (28) und einen zweiten Verbinder (29), der in der gleichen Position wie der erste Verbinder (28) in einer Quer-Richtung (Y) des Spreiz-Sitz-Fahrzeuges (1) oder in einer Position rechts von dem ersten Verbinder (28) positioniert ist, beinhaltet;
eine erste Verrohrung (41), die mit dem ersten Verbinder (28) verbunden ist;
eine zweite Verrohrung (51), die mit dem zweiten Verbinder (29) verbunden ist;
einen Haupt-Zylinder (19), der höher als die Hydraulik-Einheit (27) positioniert ist, fixiert an der Lenk-Vorrichtung (11) und mit einer von der ersten Verrohrung (41) und der zweiten Verrohrung (51) verbunden ist;
eine Hydraulik-Bremse (23), die niedriger als die Hydraulik-Einheit (27) positioniert ist, und mit der anderen von der ersten Verrohrung (41) und der zweiten Verrohrung (51) verbunden ist; und
ein Erscheinungs-Bestimmungs-Element (31), das vor der Hydraulik-Einheit (27) positioniert ist und rechts und links von der Hydraulik-Einheit (27) positioniert ist; wobei
die Hydraulik-Einheit (27) eine Mitte (yc1) in der Quer-Richtung (Y) derselben hat, die Mitte (yc1) ist in einer von den Richtungen nach rechts und nach links von einer Fahrzeug-Mitten-Ebene (C), die sich durch eine Mitte des Spreiz-Sitz-Fahrzeugs (1) und senkrecht zu der Quer-Richtung (Y) erstreckt, angeordnet; das Fahrzeug ist **dadurch gekennzeichnet, dass**
die erste Verrohrung (41) ein erstes Ende (42) hat, das mit dem ersten Verbinder (28) verbunden ist, das Ende (42) erstreckt sich in eine erste Richtung (D1) von dem ersten Verbinder (28);
die erste Richtung (D1) beinhaltet eine Komponente (v1) in der Quer-Richtung (Y);
die Komponente (v1) in der Quer-Richtung (Y) der ersten Richtung (D1) zeigt nach rechts;
die zweite Verrohrung (51) hat ein zweites Ende (52), das mit dem zweiten Verbinder (29) verbunden ist,
das zweite Ende (52) erstreckt sich in eine zweite Richtung (D2) von dem zweiten Verbinder (29);
die zweite Richtung (D2) beinhaltet eine Komponente (v2) in der Quer-Richtung (Y); und
die Komponente (v2) in der Quer-Richtung (Y) von der zweiten Richtung (D2) zeigt nach links.

2. Das Spreiz-Sitz-Fahrzeug (1) gemäß Anspruch 1, wobei:
die erste Richtung (D1) eine Komponente (u1) in einer Längsrichtung (X) des Spreiz-Sitz-Fahrzeuges (1) beinhaltet;
die zweite Richtung (D2) beinhaltet eine Komponente (u2) in der Längsrichtung (X); und
die Komponente (u1) in der Längsrichtung (X) der ersten Richtung (D1) zeigt entgegen zu der Komponente (u2) in der Längsrichtung (X) in der zweiten Richtung (D2).

3. Das Spreiz-Sitz-Fahrzeug (1) gemäß Anspruch 1 oder 2, wobei:
die erste Richtung (D1) eine Komponente (w1) in einer Oben-Unten-Richtung (Z) des Spreiz-Sitz-Fahrzeuges (1) beinhaltet;
die zweite Richtung (D2) beinhaltet eine Komponente (w2) in der Oben-Unten-Richtung (Z); und
die Komponente (w1) in der Oben-Unten-Richtung (Z) der ersten Richtung (D1) zeigt entgegen zu der Komponente (w2) in der Oben-Unten-Richtung (Z) von der zweiten Richtung (D2).

4. Das Spreiz-Sitz-Fahrzeug (1) gemäß irgendeinem der Ansprüche 1 bis 3, wobei der erste Verbinder (28) und der zweite Verbinder (29) an der gleichen Fläche der Hydraulik-Einheit (27) angeordnet sind.

5. Das Spreiz-Sitz-Fahrzeug (1) gemäß irgendeinem der Ansprüche 1 bis 4, wobei der erste Verbinder (28) und der zweite Verbinder (29) beide in einer von den Richtungen nach rechts und nach links von der Fahrzeug-Mitten-Ebene (C) angeordnet sind.

6. Das Spreiz-Sitz-Fahrzeug (1) gemäß irgendeinem der Ansprüche 1 bis 5, wobei:
die erste Verrohrung (41) hat:
eine erste nahe Leitung (44), die das erste Ende (42) beinhaltet;
ein erstes Verbindungs-Element (45), das mit der ersten nahen Leitung (44) verbunden ist; und
eine erste ferne Leitung (46), die mit dem ersten Verbindungs-Element (45) verbunden ist;
die zweite Verrohrung (51) hat:
eine zweite nahe Leitung (54), die das zweite Ende (52) beinhaltet;
ein zweites Verbindungs-Element (55), das mit der zweiten nahen Leitung (54) verbunden ist; und
eine zweite ferne Leitung (56), die mit dem zweiten Verbindungs-Element (55) verbunden ist; und
wobei die erste nahe Leitung (44) und die zweite nahe Leitung (54) nicht in einer Draufsicht überlappen.

7. Das Spreiz-Sitz-Fahrzeug gemäß Anspruch 6, wobei:
das erste Verbindungs-Element (45), das Kopf-Rohr (4) in einer Draufsicht überlappt;
das zweite Verbindungs-Element (55), das Kopf-Rohr (4) in einer Draufsicht überlappt; und
die erste nahe Leitung (44) und die zweite nahe Leitung (54) sind links von einem rechten Ende (PR) von der Gesamtheit der Hydraulik-Einheit (27), dem ersten Verbindungs-Element (45) und dem zweiten Verbindungs-Element (55) angeordnet, und rechts von einem linken Ende (PL) der Gesamtheit der Hydraulik-Einheit (27), dem ersten Verbindungs-Element (54) und dem zweiten Verbindungs-Element (55) angeordnet.

8. Das Spreiz-Sitz-Fahrzeug (1) gemäß irgendeinem der Ansprüche 1 bis 7, wobei:
die Anzahl des Haupt-Zylinders (19), mit dem die Hydraulik-Einheit (27) verbunden ist, eins ist; und
die Anzahl der Hydraulik-Bremse (23), mit dem die Hydraulik-Einheit (27) verbunden ist, eins ist.

9. Das Spreiz-Sitz-Fahrzeug (1) gemäß irgendeinem der Ansprüche 1 bis 8, wobei:
eine von der ersten Verrohrung (41) und der zweiten Verrohrung (51), die mit dem Haupt-Zylinder (19) verbunden sind, einen nach unten gekrümmten Abschnitt (53) hat, der gekrümmt ist, um einen nach unten gerichteten Vorstand zu bilden; und der nach unten gekrümmte Abschnitt (53) ist in einer Position niedriger als irgendeiner von dem ersten Verbinder (28) und dem zweiten Verbinder (29) positioniert.

10. Das Spreiz-Sitz-Fahrzeug (1) gemäß irgendeinem der Ansprüche 1 bis 9, wobei:
die andere von der ersten Verrohrung (41) und der zweiten Verrohrung (51), die mit der Hydraulik-Bremse (23) verbunden ist, einen nach oben gekrümmten Abschnitt (43) hat, der gekrümmt ist, um einen nach oben gerichteten Vorstand zu bilden; und der nach oben gekrümmte Abschnitt (43) ist an einer Position angeordnet höher als irgendeiner von dem ersten Verbinder (28) und dem zweiten Verbinder (29).

11. Das Spreiz-Sitz-Fahrzeug (1) gemäß irgendeinem der Ansprüche 1 bis 10 umfasst eine Lager-Einheit (71), die positioniert ist, um die Hydraulik-Einheit (27) in einer Seiten-Ansicht des Fahrzeugs zu überlappen;
wobei die Lager-Einheit (71) eine Mitte (yc2) in der Quer-Richtung (Y) derselben hat, diese Mitte (yc2) ist entgegen, quer zu der Fahrzeug-Mitten-Ebene (C), zu der Mitte (yc1) der Hydraulik-Einheit (27) in der Quer-Richtung (Y), angeordnet.

12. Das Spreiz-Sitz-Fahrzeug (1) gemäß irgendeinem der Ansprüche 1 bis 11, das umfasst:
ein erstes Halte-Element (65) zum Halten der ersten Verrohrung (41), das erste Halte-Element (65) ist in einer Position, niedriger als ein oberes Ende (4t) des Kopf-Rohrs (4) und höher als ein unteres Ende (4b) des Kopf-Rohrs (4), positioniert; und
ein zweites Halte-Element (67) zum Halten der zweiten Verrohrung (41), das zweite Halte-Element (67) ist in einer Position niedriger als das obere Ende (4t) des Kopf-Rohrs (4) und höher als das untere Ende (4b) des Kopf-Rohrs (4), positioniert;
wobei das erste Halte-Element (65) und das zweite Halte-Element (67) in einer Linie in einer Oben-Unten-Richtung (Z) in einer Seiten-Ansicht des Fahrzeugs angeordnet sind.

13. Das Spreiz-Sitz-Fahrzeug (1) gemäß irgendeinem der Ansprüche 1 bis 11, das umfasst:
ein erstes Halte-Element (65), das durch das Kopf-Rohr (4) gelagert ist, zum Halten der ersten Verrohrung (41); und
ein zweites Halte-Element (67), das durch das Kopf-Rohr (4) gelagert ist, zum Halten der zweiten Verrohrung (51);
wobei zumindest eines von dem ersten Halte-Element (65) und dem zweiten Halte-Element (67) in einer Position näher zu dem Kopf-Rohr (4) als ein Ende (PR) der Hydraulik-Einheit (27), das am weitesten von dem Kopf-Rohr (4) entfernt ist, positioniert ist.

## Revendications

1. Véhicule à enfourcher (1) comportant :
un tube frontal (4) ;
un dispositif de direction (11) maintenu de manière pivotante par le tube frontal (4) ;
une unité hydraulique (27) fixée au tube frontal (4) et comprenant un premier raccord (28) et un second raccord (29) disposé dans la même position que le premier raccord (28) dans une direction transversale (Y) du véhicule à enfourcher (1) ou dans une position sur la droite du premier raccord (28) ;
un premier système de conduites (41) connecté au premier raccord (28) ;
un second système de conduites (51) connecté au second raccord (29) ;
un cylindre principal (19) disposé plus haut que l'unité hydraulique (27), fixé au dispositif de direction (11) et connecté à l'un des systèmes de conduites parmi le premier système de conduites (41) et le second système de conduites (51) ;
un frein hydraulique (23) disposé plus bas que l'unité hydraulique (27) et connecté à l'autre des systèmes de conduites parmi le premier système de conduites (41) et le second système de conduites (51) ; et
un élément constitutif de l'apparence (31) disposé en avant de l'unité hydraulique (27) et disposé sur la droite et sur la gauche de l'unité hydraulique (27) ;
où
l'unité hydraulique (27) présente un centre (yc1) dans la direction transversale (Y), le centre (yc1) étant situé sur la droite ou sur la gauche d'un plan médian (C) du véhicule s'étendant à travers un centre du véhicule à enfourcher (1) et perpendiculaire à la direction transversale (Y) ; le véhicule étant **caractérisé en ce que** le premier système de conduites (41) présente une première extrémité (42) connectée au premier raccord (28), la première extrémité (42) s'étendant dans une première direction (D1) à partir du premier raccord (28) ;
la première direction (D1) comprend une composante (v1) dans la direction transversale (Y) ;
la composante (v1) dans la direction transversale (Y) de la première direction (D1) pointe vers la droite ;
le second système de conduites (51) présente une seconde extrémité (52) connectée au second raccord (29),
la seconde extrémité (52) s'étendant dans une seconde direction (D2) à partir du second raccord (29),
la seconde direction (D2) comprend une composante (v2) dans la direction transversale (Y) ; et
la composante (v2) dans la direction transversale (Y) de la seconde direction (D2) pointe vers la gauche.

2. Véhicule à enfourcher (1) selon la revendication 1, où :
la première direction (D1) comprend une composante (u1) dans une direction longitudinale (X) du véhicule à enfourcher (1) ;
la seconde direction (D2) comprend une composante (u2) dans la direction longitudinale (X) ; et
la composante (u1) dans la direction longitudinale (X) de la première direction (D1) pointe dans la direction opposée à la composante (u2) dans la direction longitudinale (X) de la seconde direction (D2).

3. Véhicule à enfourcher (1) selon la revendication 1 ou 2, où :
la première direction (D1) comprend une composante (w1) dans une direction de haut en bas (Z) du véhicule à enfourcher (1) ;
la seconde direction (D2) comprend une composante (w2) dans une direction de haut en bas (Z) ; et
la composante (w1) dans la direction de haut en bas (Z) de la première direction (D1) pointe dans la direction opposée à la composante (w2) dans la direction de haut en bas (Z) de la seconde direction (D2).

4. Véhicule à enfourcher (1) selon l'une quelconque des revendications 1 à 3, où le premier raccord (28) et le second raccord (29) sont agencés sur la même surface de l'unité hydraulique (27).

5. Véhicule à enfourcher (1) selon l'une quelconque des revendications 1 à 4, où le premier raccord (28) et le second raccord (29) sont tous deux situés dans l'une des directions que sont la droite et la gauche par rapport au plan médian (C) du véhicule.

6. Véhicule à enfourcher (1) selon l'une quelconque des revendications 1 à 5, où :
le premier système de conduites (41) présente :
une première conduite proximale (44) comprenant la première extrémité (42) ;
un premier élément de joint (45) connecté à la première conduite proximale (44) ; et
une première conduite distale (46) connectée au premier élément de joint (45) ; et
le second système de conduites (51) présente :
une seconde conduite proximale (54) comprenant la seconde extrémité (52) ;
un second élément de joint (55) connecté à la seconde conduite proximale (54) ; et
une seconde conduite distale (56) connectée au second élément de joint (55) ; et où la première conduite proximale (44) et la seconde conduite proximale (54) ne se chevauchent pas dans une vue en plan.

7. Véhicule à enfourcher (1) selon la revendication 6, où :
le premier élément de joint (45) chevauche le tube frontal (4) dans une vue en plan ;
le second élément de joint (55) chevauche le tube frontal (4) dans une vue en plan ; et
la première conduite proximale (44) et la seconde conduite proximale (54) sont agencées sur la gauche d'une extrémité droite (PR) de l'ensemble comprenant l'unité hydraulique (27), le premier élément de joint (45) et le second élément de joint (55) et sur la droite d'une extrémité gauche (PL) de l'ensemble comprenant l'unité hydraulique (27), le premier élément de joint (45) et le second élément de joint (55).

8. Véhicule à enfourcher (1) selon l'une quelconque des revendications 1 à 7, où :
le nombre du cylindre principal (19) auquel est connectée l'unité hydraulique (27) est un ; et
le nombre du frein hydraulique (23) auquel est connectée l'unité hydraulique (27) est un.

9. Véhicule à enfourcher (1) selon l'une quelconque des revendications 1 à 8, où :
l'un des systèmes de conduites que sont le premier système de conduites (41) et le second système de conduites (51) connectés au cylindre principal (19) présente une partie courbée vers le bas (53) qui est courbée de manière à former une protubérance orientée vers le bas ; et
la partie courbée vers le bas (53) est située en une position inférieure à celle de l'un quelconque des premier (28) et second raccords (29).

10. Véhicule à enfourcher (1) selon l'une quelconque des revendications 1 à 9, où :
l'autre des systèmes de conduites que sont le premier système de conduites (41) et le second système de conduites (51) connectés au frein hydraulique (23) présente une partie courbée vers le haut (43) qui est courbée de manière à former une protubérance orientée vers le haut ; et
la partie courbée vers le haut (43) est située en une position supérieure à celle de l'un quelconque des premier (28) et second raccords (29).

11. Véhicule à enfourcher (1) selon l'une quelconque des revendications 1 à 10, comportant une unité de stockage (71) disposée de manière à chevaucher l'unité hydraulique (27) dans une vue latérale du véhicule ;
où l'unité de stockage (71) comporte un centre (yc2) dans la direction transversale (Y), ledit centre (yc2) étant situé en face du centre (yc1) de l'unité hydraulique (27) dans la direction transversale (Y), de l'autre côté du plan médian (C) de véhicule.

12. Véhicule à enfourcher (1) selon l'une quelconque des revendications 1 à 11, comportant :
un premier élément de maintien (65) pour maintenir le premier système de conduites (41), le premier élément de maintien (65) étant disposé en une position inférieure à celle d'une extrémité supérieure (4t) du tube frontal (4) et supérieure à celle d'une extrémité inférieure (4b) du tube frontal (4) ; et
un second élément de maintien (67) pour maintenir le second système de conduites (51), le second élément de maintien (67) étant disposé en une position inférieure à celle de l'extrémité supérieure (4t) du tube frontal (4) et supérieure à celle de l'extrémité inférieure (4b) du tube frontal (4) ;
où le premier élément de maintien (65) et le second élément de maintien (67) sont alignés dans une direction de haut en bas (Z) dans une vue latérale du véhicule.

13. Véhicule à enfourcher (1) selon l'une quelconque des revendications 1 à 11, comportant :
un premier élément de maintien (65) maintenu par le tube frontal (4) pour maintenir le premier système de conduites (41) ; et
un second élément de maintien (67) maintenu par le tube frontal (4) pour maintenir le second système de conduites (51) ;
où au moins un des éléments de maintien que sont le premier élément de maintien (65) et le second élément de maintien (67) sont disposés en une position plus proche du tube frontal (4) qu'une extrémité (PR) de l'unité hydraulique (27) la plus éloignée du tube frontal (4).
